# EUROPÄISCHE PATENTSCHRIFT

(11) **EP 3 431 422 B1**
(45) Veröffentlichungstag und Bekanntmachung des Hinweises auf die Patenterteilung: **06.08.2025**
(21) Anmeldenummer: 18181203.3
(22) Anmeldetag: 02.07.2018
(51) Int. Cl.: B65G 47/90, B25J 15/04

(54) **GREIFEINRICHTUNG FÜR EINEN MANIPULATOR UND VERFAHREN ZUM AUSRÜSTEN EINER FÜR EINEN MANIPULATOR VORGESEHENEN GREIFEINRICHTUNG**
GRIPPER DEVICE FOR A MANIPULATOR AND A METHOD FOR EQUIPPING A GRIPPING DEVICE FOR A MANIPULATOR
DISPOSITIF DE PRÉHENSION POUR UN MANIPULATEUR ET PROCÉDÉ D'ÉQUIPEMENT D'UN DISPOSITIF DE PRÉHENSION POUR UN MANIPULATEUR

(30) Priorität: 18.07.2017 DE 102017116154
(43) Veröffentlichungstag der Anmeldung: 23.01.2019
(73) Patentinhaber: Krones Aktiengesellschaft, 93073 Neutraubling (DE)
(72) Erfinder: MURNAUER, Dominik, 93073 Neutraubling (DE); WESTERMEIER, Christian, 93073 Neutraubling (DE); HARTL, Michael, 93073 Neutraubling (DE); UNTERSEHER, Josef, 93073 Neutraubling (DE)
(74) Vertreter: Benninger, Johannes

(56) Entgegenhaltungen:
- DE-A1- 102014 223 389
- DE-U1- 8 706 525
- FR-A1- 2 856 327
- FR-A1- 2 926 238
- FR-A1- 2 965 194
- JP-A- 2003 181 786
- US-A- 5 222 854
- US-A1- 2006 088 367
- US-A1- 2014 356 049
- KRONES AG: "krones Robobox Fully-automatic grouping station", 31 October 2012 (2012-10-31), XP055514865, Retrieved from the Internet <URL:https://web.archive.org/web/20140513185913if_/http://www.krones.com:80/downloads/robobox_en.pdf> [retrieved on 20181012]
- KRONES: "krones Robogrip The multi-functional packing and palletising robot", WWW.SANITARYINDUSTRY.COM/, 16 July 2016 (2016-07-16), pages 1 - 12, XP055912981, Retrieved from the Internet <URL:http://www.sanitaryindustry.com/upload/201607/16/201607160910233009.pdf> [retrieved on 20220414]

## Beschreibung

Die vorliegende Erfindung betrifft eine Klemm- und Greifeinrichtung für einen Manipulator und ein Verfahren zum Ausrüsten einer für einen Manipulator vorgesehenen Klemm- und Greifeinrichtung.

Bekannte Verpackungs- oder Palettieranlagen zum Stapeln, Palettieren oder Drehen und/oder Verteilen von Objekten wie Paketen oder Gebinden mit mehreren Artikeln wie bspw. Getränkebehältern weisen üblicherweise Horizontalfördereinrichtungen mit Förderbändern auf, auf denen die Stückgüter oder Gebinde in ununterbrochener oder unregelmäßiger Folge und beabstandet zu einer Handhabungseinrichtung befördert werden. Dort erfolgt eine Verschiebung, Ausrichtung und/oder ein Drehen einzelner Stückgüter oder Gebinde, um diese in eine geeignete räumliche Anordnung zu bringen, die eine Basis bildet, um die Stückgüter oder Gebinde in nachgeordneten Gruppierstationen zu stapelfähigen Stückgut- oder Gebindelagen zusammenzuschieben.

Bekannte Handhabungseinrichtungen, welche eine solche Verschiebung, Ausrichtung und/oder ein solches Drehen einzelner Stückgüter oder Gebinde bewirken, können auch mit Greifern versehen sein, die bspw. an einem Portalsystem aufgehängt und in einem definierten Bewegungsbereich verschoben, rotiert und zudem in vertikaler Richtung bewegt werden können, um einzelne Stückgüter oder Gebinde zum Drehen und/oder Verschieben anheben zu können. Das Drehen und/oder Verschieben kann auch erfolgen, ohne dass die jeweiligen Stückgüter oder Gebinde in vertikaler Richtung bewegt werden. Die Greifer können in weiteren bekannten Ausführungsformen auch an Mehrachsroboterarmen angeordnet sein, die seitlich an den Horizontalfördereinrichtungen platziert sind. Derartige Greifvorrichtungen sind etwa aus der EP 2 388 216 A1 bekannt. Die in der EP-Patentanmeldung offenbarte Greifvorrichtung besitzt zwei sich gegenüberliegende Greifmittel, die zum Entgegennehmen von Stückgütern zugestellt werden können. Setzt die Greifvorrichtung ungewollt auf eine Bodenfläche auf, so können sich die zwei gegenüberliegenden Greifmittel von einem Träger lösen, womit Beschädigungen der Greifvorrichtung entgegengewirkt werden soll.

Eine weitere solche Greifvorrichtung ist beispielsweise aus der DE 102 04 513 A1 bekannt. Die in der DE-Anmeldung offenbarte Greifvorrichtung umfasst zwei Greifarme zum Greifen von Gegenständen. Einer der beiden Greifarme ist mit einem Fahrzeug verbindbar. Der weitere Greifarm dient zum Öffnen und Schließen der Greifvorrichtung über ein Stellglied.

Die Praxis hat gezeigt, dass bei aufeinanderfolgenden Prozessen Artikel mit unterschiedlichen relativen Abständen bzw. Teilungsabständen zueinander in den Arbeitsbereich der Greifvorrichtung gelangen können. Bei bisher bekannten Handhabungseinrichtungen muss bis dato die vollständige Greifvorrichtung ausgetauscht werden, um unter Berücksichtigung des neuen relativen Abstandes Artikel gezielt erfassen zu können. Auch bei aufeinanderfolgenden Prozessen, bei welchen Artikel unterschiedliche Geometrien bzw. Dimensionierungen besitzen oder mit unterschiedlicher Stückzahl gehandhabt werden sollen, ist eine Anpassung der jeweiligen Handhabungseinrichtung mit einem vollständigen Austausch der Greifvorrichtung verbunden.

Da vollständige Greifvorrichtungen eine große Masse besitzen, ist ein solcher Austausch umständlich und gelegentlich mit Problemen verbunden. Wünschenswert sind daher Möglichkeiten, mit welchen eine Greifvorrichtung auf vereinfachte Art und Weise umgerüstet bzw. an jeweilige zu manipulierende Artikel angepasst werden kann.

Die DE 87 06 525 U offenbart eine Handhabungseinrichtung mit Greiffingern, die jeweils lösbar an mittels Antriebs beweglichen Stellschlitten angeordnet und befestigt sind. Jeder der Greiffinger weist einen Steckfuß auf, der in eine entsprechende Aufnahmeführung im Stellschlitten einschiebbar und dort vorriegelbar ist. Für eine Umrüstung von einem auf einen anderen zu hantierenden Bauteiltyp können die einzelnen Greiffinger bedarfsweise ausgetauscht werden, allerdings immer nur in jeweils denselben Aufnahmeführungen an jeweils einer einzigen Verriegelungsposition.

Die FR 2 856 327 A1 offenbart ein Verbindungselement zwischen einem Manipulator und zwei Greifelementen. Das Verbindungselement ist T-förmig ausgebildet und umfasst zwei Arme. Das Verbindungselement ist mit seinem proximalen Ende an einem Manipulator befestigt. Die Greifelemente umfassen jeweils einen Balken, welche Balken von den Armen des Verbindungselements zumindest abschnittsweise aufgenommen werden. Das Festsetzen der Balken an den Armen des Verbindungselements oder das Lösen der Balken von den Armen des Verbindungselements erfolgt mittels eines Verriegelungsmechanismus.

Aus der US 2014/356049 A1 ist ein Roboter bekannt, der einen Hauptausleger besitzt, der über ein T-Stück mit einem Schenkel auf einer Längsachse verbunden ist. Orthogonal zur Längsachse erstrecken sich weitere Abzweigungen. Die verschiedenen Abzweigungen wiederum sind über eine entsprechende Tandem-Abzweiganordnung mit einem Schenkel verbunden. Jeder der Zweige trägt ein Werkzeugmodul, wobei jedes Werkzeugmodul ein Endwerkzeug aufweist, das als pneumatischer Saugnapf ausgebildet ist.

DE 10 2014 223389 A1 offenbart ein System zum Handhaben von Artikeln nach dem Oberbegriff des Anspruchs 1. Angesichts des bekannten Standes der Technik kann eine vorrangige Aufgabe der Erfindung darin gesehen werden, eine Möglichkeit bereitzustellen, mittels welcher Klemm- und/oder Greifvorrichtungen auf vereinfachte Art und Weise auf unterschiedliche Artikel abgestimmt umgerüstet werden können, die mittels der Klemm- und/oder Greifvorrichtung entgegengenommen bzw. manipuliert werden sollen. Dies soll zudem über bereitgestellte technische Mittel ökonomisch sinnvoll erreicht werden.

Die DE 10 2014 223389 A1 offenbart eine Vorrichtung und ein Verfahren zur Handhabung von Artikeln. Bestandteil der Vorrichtung ist ein Manipulator, der eine Welle besitzt. Wenn die Welle gedreht wird, werden Klemmbacken des Manipulators relativ zueinander bewegt, wodurch Artikel erfasst werden können oder wodurch eine bestehende klemmende Verbindung zu Artikeln gelöst werden kann.

Angesichts des bekannten Standes der Technik kann eine vorrangige Aufgabe der Erfindung darin gesehen werden, eine Möglichkeit bereitzustellen, mittels welcher Klemm- und Greifvorrichtungen auf vereinfachte Art und Weise auf unterschiedliche Artikel abgestimmt umgerüstet werden können, die mittels der Klemm- und Greifvorrichtung entgegengenommen bzw. manipuliert werden sollen. Dies soll zudem über bereitgestellte technische Mittel ökonomisch sinnvoll erreicht werden.

Die obige Aufgabe wird durch die Gegenstände der unabhängigen Ansprüche gelöst. Weitere vorteilhafte Ausgestaltungen werden durch die Unteransprüche beschrieben.

Die Erfindung betrifft ein System zum Handhaben von Artikeln nach Anspruch 1 sowie ein Verfahren nach Anspruch 11 zum Ausrüsten einer für einen Manipulator vorgesehenen Klemm- und Greifeinrichtung mit mindestens zwei zur gemeinsamen Entgegennahme von Artikeln vorgesehenen Klemm- und Greifelementen. Somit kann sinnvollerweise vorgesehen sein, dass die mindestens zwei zur gemeinsamen Entgegennahme von Artikeln vorgesehenen Klemm- und Greifelemente zur kraftbeaufschlagten und/oder formschlüssigen Entgegennahme jeweils eines Artikels oder jeweils mehrerer Artikel ausgebildet sind. Die Klemm- und Greifelemente können reversibel elastisch verformbare Kontaktbereiche umfassen, die zur jeweiligen Anlage an einem jeweiligen entgegenzunehmenden Artikel oder jeweiligen mehreren entgegenzunehmenden Artikeln vorgesehen sind. Insbesondere können die mindestens zwei Klemm- und Greifelemente jeweils als Paddel ausgebildet sein. Sinnvollerweise kann es sein, dass die mindestens zwei Klemm- und Greifelemente bzw. die mindestens zwei Paddel als hängender Bestandteil des Klemm- und Greifeinrichtung ausgebildet sind bzw. über eine als Bestandteil der Klemm- und Greifeinrichtung ausgebildete Basis hängend getragen werden.

Die mindestens zwei Klemm- und Greifelemente können zur gemeinsamen Entgegennahme von Artikeln vorgesehen sein, welche Artikel beispielsweise durch Getränkebehältnisse und insbesondere durch PET-Flaschen ausgebildet sind.

Im Rahmen eines ersten Schrittes des Verfahrens werden wenigstens zwei durch die Klemm- und Greifeinrichtung bereitgestellte Befestigungspositionen für die mindestens zwei zur gemeinsamen Entgegennahme von Artikeln ausgebildeten Klemm- und Greifelemente ausgewählt. Eine Anzahl der durch die Klemm- und Greifeinrichtung bereitgestellten Befestigungspositionen kann somit gegenüber einer Anzahl der mindestens zwei zur gemeinsamen Entgegennahme von Artikeln vorgesehenen Klemm- und Greifelemente vergrößert sein. Sofern die mindestens zwei zur gemeinsamen Entgegennahme von Artikeln ausgebildeten Klemm- und Greifelemente, wie nachfolgend noch detailliert erwähnt, in ausgewählten Befestigungspositionen festgesetzt sind, können weitere Befestigungspositionen unbesetzt verbleiben.

Somit ist ein weiterer Schritt vorgesehen, bei welchem die mindestens zwei zur gemeinsamen Entgegennahme von Artikeln ausgebildeten Klemm- und Greifelemente an den wenigstens zwei ausgewählten Befestigungspositionen festgesetzt werden. Die mindestens zwei Klemm- und Greifelemente können daher vor dem Festsetzten an den wenigstens zwei ausgewählten Befestigungspositionen keine mechanische Verbindung zueinander besitzen bzw. mechanisch vollständig voneinander getrennt sein.

Es ist vorgesehen, dass die wenigstens zwei Befestigungspositionen jeweils aus mehreren möglichen Befestigungspositionen und unter Berücksichtigung einer Anzahl und/oder Ausbildung über die mindestens zwei Klemm- und Greifelemente gemeinsam entgegenzunehmender Artikel ausgewählt werden und die mindestens zwei Klemm- und Greifelemente hierauf folgend in den wenigstens zwei ausgewählten Befestigungspositionen abnehmbar festgesetzt werden. Beispielsweise kann die Klemm- und Greifeinrichtung derart ausgebildet sein, dass die mindestens zwei ausgewählten Klemm- und Greifelemente manuell bzw. über einen Bediener in den wenigstens zwei ausgewählten Befestigungspositionen abnehmbar festgesetzt werden können.

Hierdurch kann die Klemm- und Greifeinrichtung auf einfache Art und Weise für einen jeweiligen Verpackungsbetrieb ausgerüstet bzw. umgerüstet werden. Vorstellbar ist hierbei, dass während eines ersten Verpackungsbetriebes Getränkebehälter entgegengenommen werden sollen, welche eine erste Geometrie bzw. ein erstes Volumen besitzen. Für einen weiteren Verpackungsbetrieb, welcher auf den ersten Verpackungsbetrieb zeitlich folgt, kann vorgesehen sein, dass Getränkebehälter über die Klemm- und Greifeinrichtung entgegengenommen werden, welche eine zweite Geometrieb bzw. ein zweites Volumen besitzen, welches sich von der ersten Geometrie bzw. dem ersten Volumen der im Verlauf des ersten Verpackungsbetriebes entgegenzunehmenden Getränkebehältern unterscheidet. Durch die beschriebene Auswahl wenigstens zweier Befestigungspositionen aus mehreren bzw. einer Vielzahl an Befestigungspositionen und das Festsetzen der Klemm- und Greifelemente an den ausgewählten Befestigungspositionen kann die Klemm- und Greifeinrichtung auf einfache Art und Weise für einen jeweiligen Verpackungsbetrieb ausgerüstet werden.

Erfindungsgemäß hat sich bewährt, dass die mindestens zwei zur Entgegennahme von Artikeln ausgebildeten Klemm- und Greifelemente an den wenigstens zwei ausgewählten Befestigungspositionen werkzeuglos festgesetzt werden. Hierbei kann insbesondere vorgesehen sein, dass die mindestens zwei zur Entgegennahme von Artikeln ausgebildeten Klemm- und Greifelemente an den wenigstens zwei ausgewählten Befestigungspositionen werkzeuglos und mittels einer Handhabung durch einen Bediener manuell festgesetzt werden.

Alternativ oder ergänzend kann hierbei vorgesehen sein, dass zeitlich vor dem Festsetzen der mindestens zwei zur gemeinsamen Entgegennahme von Artikeln ausgebildeten Klemm- und Greifelemente ein bereits an einer Befestigungsposition befindliches Klemm- und Greifelement oder mehrerer bereits an einer jeweiligen Befestigungsposition befindliche Klemm- und Greifelemente werkzeuglos von ihrer jeweiligen Befestigungsposition abgenommen werden. Auch hierfür ist denkbar, dass bereits an einer jeweiligen Befestigungsposition befindliche Klemm- und Greifelemente werkzeuglos und von einem Bediener manuell von ihrer jeweiligen Befestigungsposition abgenommen werden.

Nach der Erfindung wird vorgesehen, dass die mindestens zwei zur Entgegennahme von Artikeln ausgebildeten Klemm- und Greifelemente an den wenigstens zwei ausgewählten Befestigungspositionen eingehängt und hierdurch werkzeuglos an den wenigstens zwei Befestigungspositionen festgesetzt werden. Alternativ oder ergänzend kann es sein, dass zeitlich vor dem Festsetzen der mindestens zwei zur gemeinsamen Entgegennahme von Artikeln ausgebildeten Klemm- und Greifelementen ein bereits an einer Befestigungsposition befindliches Klemm- und Greifelement oder mehrere bereits an einer jeweiligen Befestigungsposition befindliche Klemm- und Greifelemente ausgehängt und hierdurch werkzeuglos von ihrer jeweiligen Befestigungsposition abgenommen werden.

Bewährt haben sich zudem Ausführungsformen, bei welchen die mindestens zwei zur Entgegennahme von Artikeln ausgebildeten Klemm- und Greifelemente an den wenigstens zwei ausgewählten Befestigungspositionen über ein jeweiliges separates und vollständig vom jeweiligen Klemm- und Greifelement mechanisch trennbares Zwischenstück eingehängt werden und hierdurch werkzeuglos an den wenigstens zwei Befestigungspositionen festgesetzt werden. Beispielsweise kann es sein, dass zunächst ein jeweiligen Klemm- und Greifelement an einem jeweiligen Zwischenstück befestigt wird. Denkbar ist hierbei, dass zunächst ein jeweiliges Klemm- und Greifelement über wenigstens eine Schraubverbindung an einem jeweiligen Zwischenstück befestigt wird. Zeitlich auf die Befestigung des jeweiligen Klemm- und Greifelementes an dem jeweiligen Zwischenstück folgend kann das jeweilige Klemm- und Greifelement zusammen mit dem jeweiligen Zwischenstück an der jeweiligen Befestigungsposition festgesetzt und hierbei insbesondere über das jeweilige Zwischenstück an der jeweiligen Befestigungsposition eingehängt werden.

Alternativ hierzu ist vorstellbar, dass zunächst das Zwischenstück an der jeweiligen Befestigungsposition eingehängt wird und zeitlich hierauf folgend das jeweilige Klemm- und Greifelement an dem jeweiligen Zwischenstück befestigt wird.

Auch kann es sein, dass zeitlich vor dem Festsetzen der mindestens zwei zur gemeinsamen Entgegennahme von Artikeln ausgebildeten Klemm- und Greifelemente ein bereits an einer Befestigungsposition befindliches Klemm- und Greifelement oder mehrere bereits an einer jeweiligen Befestigungsposition befindliche Klemm- und Greifelemente und ein jeweiliges separates, vollständig vom jeweiligen Klemm- und Greifelement trennbares und das jeweilige Klemm- und Greifelement tragendes Zwischenstück ausgehängt werden, wobei das jeweilige Klemm- und Greifelement sowie das jeweilige Zwischenstück werkzeuglos von ihrer jeweiligen Befestigungsposition abgenommen werden.

Vorstellbar ist zudem, dass die mindestens zwei zur Entgegennahme von Artikeln ausgebildeten Klemm- und Greifelemente und/oder das jeweilige separates und vollständig vom jeweiligen Klemm- und Greifelement mechanisch trennbare Zwischenstück jeweils über einen manuell lösbaren Sicherungsmechanismus verfügen.

Es kann hierbei sein, dass im Bereich einer jeweiligen ausgewählten Befestigungsposition ein Bolzen oder Stift angeordnet ist, in welchen das jeweilige Klemm- und Greifelement selbst bzw. unmittelbar oder mittels des jeweiligen Zwischenstücks über eine als Bestandteil des jeweiligen Klemm- und Greifelementes oder des Zwischenstücks ausgebildete Nut eingehängt wird. Hierauf folgend kann der manuell lösbare Sicherungsmechanismus den Bolzen oder Stift formschlüssig in der Nut halten und hierdurch das jeweilige Klemm- und Greifelement formschlüssig in der jeweiligen ausgewählten Befestigungsposition festsetzen. Die jeweilige Nut kann beispielsweise L-förmig ausgebildet sein. Insbesondere kann die jeweilige Nut wenigstens eine Biegung und/oder Umlenkung bzw. einen Bereich mit kurvenförmigem Verlauf umfassen. Alternativ oder ergänzend ist vorstellbar, dass zeitlich vor dem Festsetzen der mindestens zwei zur gemeinsamen Entgegennahme von Artikeln ausgebildeten Klemm- und Greifelemente ein bereits an einer Befestigungsposition befindliches Klemm- und Greifelement oder mehrere bereits an einer Befestigungsposition befindliche Klemm- und Greifelemente selbst oder über ein jeweiliges Zwischenstück ausgehängt werden, wozu der das jeweilige Klemm- und Greifelement in der jeweiligen Befestigungsposition formschlüssig haltende Sicherungsmechanismus gelöst wird und zeitlich hierauf folgend ein in der jeweiligen Befestigungsposition befindlicher Bolzen oder Stift aus einer als Bestandteil des jeweiligen Klemm- und Greifelementes oder des jeweiligen Zwischenstücks ausgebildeten Nut bewegt wird.

Weiter können die Sicherungsmechanismen der mindestens zwei zur Entgegennahme von Artikeln ausgebildeten Klemm- und Greifelemente jeweils über wenigstens einen durch Federkraft beaufschlagten Sicherungshebel verfügen. Der wenigstens eine durch Federkraft beaufschlagte Sicherungshebel kann L-förmig ausgebildet sein. Es kann hierbei sein, dass der jeweilige wenigstens eine durch Federkraft beaufschlagte Sicherungshebel den jeweiligen Bolzen oder Stift formschlüssig in der Nut hält und hierdurch das jeweilige Klemm- und Greifelement formschlüssig in der jeweiligen ausgewählten Befestigungsposition festsetzt.

Auch kann es sein, dass zeitlich vor dem Festsetzen der mindestens zwei zur gemeinsamen Entgegennahme von Artikeln ausgebildeten Klemm- und Greifelemente ein bereits an einer Befestigungsposition befindliches Klemm- und Greifelement oder mehrere bereits an einer jeweiligen Befestigungsposition befindliche Klemm- und Greifelemente ausgehängt werden, wozu zeitlich vorausgehend der jeweilige wenigstens eine durch Federkraft beaufschlagte Sicherungshebel des bereits an einer Befestigungsposition befindlichen Klemm- und Greifelementes oder des jeweiligen Zwischenstücks bzw. der mehreren bereits an einer jeweiligen Befestigungsposition befindlichen Klemm- und Greifelemente oder der mehreren bereits an einer jeweiligen Befestigungsposition befindlichen Zwischenstücks unter Überwindung eine jeweiligen Federkraft geschwenkt wird. Hieraus resultierend kann die Nut des jeweiligen Klemm- und Greifelementes oder des jeweiligen Zwischenstücks für die Bewegung des jeweiligen Bolzens oder Stiftes aus der jeweiligen Nut freigegeben werden.

Auch kann es sein, dass die Klemm- und Greifeinrichtung zum Festsetzen der mindestens zwei zur gemeinsamen Entgegennahme von Artikeln ausgebildeten Klemm- und Greifelemente an den wenigstens zwei ausgewählten Befestigungspositionen in einen Servicebereich bewegt wird. Hierdurch kann die Klemm- und Greifeinrichtung für einen Benutzer zum manuellen Festsetzen der mindestens zwei zur gemeinsamen Entgegennahme von Artikeln ausgebildeten Klemm- und Greifelemente in den ausgewählten Befestigungspositionen zugänglich gemacht werden. Auch kann hierdurch in alternativen oder ergänzenden Ausführungsformen ggf. die Klemm- und Greifeinrichtung zur vorzugsweise werkzeuglosen Abnahme eines bereits an einer Befestigungsposition befindlichen Klemm- und Greifelementes oder mehrerer bereits an einer jeweiligen Befestigungsposition befindlichen Klemm- und Greifelemente zugänglich gemacht werden. Vorstellbar ist insbesondere, dass die Klemm- und Greifeinrichtung oberhalb einer für einen Transport über die Klemm- und Greifeinrichtung entgegenzunehmender Artikel angeordnet ist. Es kann hierbei sein, dass Klemm- und Greifelemente zumindest abschnittsweise seitlich über die Horizontalfördereinrichtung hinausragen, wenn sich die Klemm- und Greifeinrichtung im Servicebereich befindet. Hierdurch kann ein Bediener einfach auf die Klemm- und Greifelemente der im Servicebereich befindlichen Klemm- und Greifeinrichtung bedarfsweise zugreifen.

Weiter haben sich Ausführungsformen bewährt, bei welchen eine für ein erstes Klemm- und Greifelement ausgewählte Befestigungsposition durch einen ersten Schlitten bereitgestellt wird. Auch kann eine für ein zweites Klemm- und Greifelement ausgewählte Befestigungsposition durch einen zweiten Schlitten bereitgestellte werden. Das erste Klemm- und Greifelement sowie das zweite Klemm- und Greifelement können an der über den ersten Schlitten und den zweiten Schlitten bereitgestellten ersten und zweiten Befestigungsposition festgesetzt werden, worauf folgend der erste Schlitten gemeinsam mit dem am ersten Schlitten festgesetzten Klemm- und Greifelement und der zweite Schlitten mit dem am zweiten Schlitten festgesetzten zweiten Klemm- und Greifelement vorzugsweise in horizontaler Richtung relativ zueinander bewegt werden. Hierbei können das erste Klemm- und Greifelement und das zweite Klemm- und Greifelement gemeinsam einen Artikel oder mehrere Artikel klemmend entgegennehmen. Die Klemm- und Greifeinrichtung kann eine Basis besitzen, welche den ersten Schlitten und den zweiten Schlitten trägt. Die Basis kann eine Linearführung für den ersten Schlitten und den zweiten Schlitten bereitstellen.

Es kann sein, dass sensorisch überprüft wird, ob die mindestens zwei Klemm- und Greifelemente ordnungsgemäß an ihrer jeweiligen Befestigungsposition abnehmbar festgesetzt wurden. Hierbei kann bei einer im Rahmen der Überprüfung festgestellten nicht ordnungsgemäßen Festsetzung wenigstens eines der mindestens zwei Klemm- und Greifelemente an seiner jeweiligen Befestigungsposition ein Hinweis für einen Bediener ausgegeben werden und/oder eine für die Klemm- und Greifeinrichtung vorgesehene Manipulation von Artikeln unterbunden werden. Denkbar ist hierbei, dass ein optischer und/oder akustischer Hinweis für einen Bediener ausgegeben wird. Beispielsweise kann eine Anzeige vorgesehen sein, auf welcher bei einer im Rahmen der Überprüfung festgestellten nicht ordnungsgemäßen Festsetzung wenigstens eines der mindestens zwei Klemm- und Greifelemente an seiner jeweiligen Befestigungsposition ein Hinweis für einen Bediener ausgegeben wird.

Es sind Ausführungsformen vorstellbar, bei welchen die Klemm- und Greifelemente jeweils als Paddel ausgebildet sind. Um Artikel mittels der Klemm- und Greifeinrichtung zu manipulieren, kann es notwendig sein, dass die Klemm- und Greifelemente eine auf die jeweilige Manipulation abgestimmte definierte Längserstreckung besitzen müssen, um im Rahmen der jeweiligen Manipulation jeweils einen Artikel oder jeweils mehrere Artikel klemmend und/oder formschlüssig entgegennehmen zu können. Demnach kann vorgesehen sein, dass im Rahmen der Überprüfung erkannt bzw. festgestellt wird, ob bestimmte Klemm- und Greifelemente mit einer jeweiligen auf die Manipulation abgestimmten definierten Längserstreckung an ihrer jeweiligen Befestigungsposition abnehmbar festgesetzt wurden. Hierdurch kann vermieden werden, dass die Klemm- und Greifeinrichtung unbeabsichtigt mit Klemm- und Greifelementen ausgerüstet wird, welche sich für eine jeweilige für die Klemm- und Greifeinrichtung vorgesehene Manipulationsaufgabe nicht eignen.

Es kann sein, dass die mindestens zwei Klemm- und Greifelemente händisch bzw. über einen Bediener an ihrer jeweiligen Befestigungsposition festgesetzt werden und/oder bereits an einer jeweiligen Befestigungsposition angeordnete Klemm- und Greifelemente händisch bzw. über einen Bediener von ihrer jeweiligen Befestigungsposition abgenommen werden. Darüber hinaus sind Ausführungsformen vorstellbar, bei welchen eine Handhabungseinrichtung die mindestens zwei Klemm- und Greifelemente an ihrer jeweiligen Befestigungsposition festsetzt bzw. bereits an einer jeweiligen Befestigungsposition angeordnete Klemm- und Greifelemente von ihrer jeweiligen Befestigungsposition abnimmt. Die Handhabungseinrichtung kann als Industrieroboter bzw. Mehrachsroboter ausgebildet sein. Auch kann es sein, dass die Handhabungseinrichtung als Parallelkinematik-Roboter bzw. als Tripod ausgebildet ist. Ein Arbeitsbereich der Handhabungseinrichtung kann sich zumindest abschnittsweise über den vorherig bereits erwähnten Servicebereich erstrecken. Insbesondere kann es sein, dass die Handhabungseinrichtung seitlich neben einer nachfolgend noch beschriebenen mindestens einen Horizontalfördereinrichtung angeordnet bzw. aufgestellt ist, entlang welcher mindestens einen Horizontalfördereinrichtung die zu manipulierenden Artikel bewegbar sind. Die Handhabungseinrichtung kann mit einer Steuerungseinheit in Verbindung stehen. Soll eine für einen Manipulator vorgesehene Klemm- und Greifeinrichtung mit mindestens zwei zur gemeinsamen Entgegennahme von Artikeln vorgesehenen Klemm- und Greifelementen ausgerüstet werden, so kann dieses Ausrüsten über die Steuerungseinheit und auf Veranlassung eines Bedieners vollautomatisch bewirkt bzw. umgesetzt werden.

Bewährt haben sich zudem Ausführungsformen, bei welchen die Klemm- und Greifeinrichtung zur sensorischen Überprüfung aus der Serviceposition bzw. aus dem Servicebereich in einen Erfassungsbereich einer vorzugsweise durch eine Kamera und/oder einen Zeilensensor ausgebildeten Sensorik bewegt bzw. verfahren wird. Auch kann es sein, dass eine durch eine Kamera und/oder einen Zeilensensor ausgebildete Sensorik in Richtung Klemm- und Greifeinrichtung bewegt wird, welche sich weiterhin in der Serviceposition bzw. im Servicebereich befindet, woraufhin überprüft wird, ob die mindestens zwei Klemm- und Greifelemente ordnungsgemäß an ihrer jeweiligen Befestigungsposition abnehmbar festgesetzt wurden. Die Bewegung der durch eine Kamera und/oder einen Zeilensensor ausgebildeten Sensorik in Richtung der Klemm- und Greifeinrichtung kann weiterhin auf Veranlassung einer Steuerungseinheit erfolgen. Insbesondere kann es sein, dass die durch eine Kamera und/oder einen Zeilensensor ausgebildete Sensorik über eine Handhabungseinrichtung in Richtung der Klemm- und Greifeinrichtung bewegt wird.

Die Erfindung betrifft darüber hinaus eine zum Entgegennehmen von Artikeln vorgesehene Klemm- und Greifeinrichtung für einen Manipulator als Teil des Systems gemäß Anspruch 1. Merkmale, welche vorhergehend bereits zu diversen Ausführungsformen des Verfahrens beschrieben wurden, können auch bei der nachfolgend beschriebenen Klemm- und Greifeinrichtung vorgesehen sein und werden daher nicht redundant erwähnt. Auch können nachfolgend beschriebene Merkmale, welche diverse Ausführungsformen der Klemm- und Greifeinrichtung betreffen, ggf. bei dem vorhergehend bereits beschriebenen Verfahren vorgesehen sein.

Die zum Entgegennehmen von Artikeln vorgesehene Klemm- und Greifeinrichtung umfasst mindestens zwei jeweils hängend angeordnete Klemm- und Greifelemente, welche zum temporären Entgegennehmen eines Artikels oder mehrerer Artikel zusammenwirken. Breitseitenflächen der mindestens zwei jeweils hängend angeordneten Klemm- und Greifelemente können paarweise zueinander weisen. Die Breitseitenflächen können einen Kontaktbereich für Artikel besitzen, welcher reversibel elastisch verformbar ist. Hierdurch kann einer mit der Entgegennahme von Artikeln ungewollt einhergehenden Beschädigung von Artikeln entgegengewirkt werden.

Um einen Artikel oder mehrerer Artikel temporär entgegenzunehmen, können Klemm- und Greifelemente, deren Breitseitenflächen paarweise zueinander weisen, ggf. eine Zustellbewegung ausführen, im Rahmen welcher Zustellbewegung ein jeweiliger Artikel oder mehrere jeweilige Artikel klemmend erfasst werden. Die Zustellbewegung kann derart ausgebildet sein, dass die Klemm- und Greifelemente, deren Breitseitenflächen paarweise zueinander weisen, um eine vorzugsweise horizontal orientierte Achse geschwenkt werden. Bewährt haben sich jedoch Ausführungsformen, bei welchen Klemm- und Greifelemente, deren Breitseitenflächen paarweise zueinander weisen, im Rahmen der Zustellbewegung horizontal bewegt werden und hierbei ihren relativen Abstand zueinander verkleinern.

In weiteren Ausführungsformen kann es sein, dass Klemm- und Greifelemente, deren Breitseitenflächen paarweise zueinander weisen, ihre Relativposition beibehalten. Hierbei kann ein jeweiliger Artikel oder mehrerer jeweilige Artikel ggf. zwischen die Klemm- und Greifelemente bewegt werden, deren Breitseitenflächen paarweise zueinander weisen, so dass der jeweilige Artikel oder die jeweiligen mehreren Artikel formschlüssig über die jeweiligen Klemm- und Greifelemente, deren Breitseitenflächen paarweise zueinander weisen, entgegengenommen ist bzw. wurde. Über einen nachfolgen noch beschriebenen Manipulator können die Klemm- und Greifelemente, deren Breitseitenflächen paarweise zueinander weisen, ggf. zusammen mit dem jeweiligen zwischen diesen Klemm- und Greifelementen angeordneten und formschlüssig durch diese Klemm- und Greifelemente aufgenommenen Artikel gedreht werden.

Es ist nach der Erfindung vorgesehen, dass die Klemm- und Greifeinrichtung mehrere verschiedene Befestigungspositionen für die mindestens zwei Klemm- und Greifelemente bereitstellt, an welchen mehreren verschiedenen Befestigungspositionen die mindestens zwei Klemm- und Greifelemente abgestimmt auf eine jeweilige Anzahl und/oder Ausbildung entgegenzunehmender Artikel selektiv und abnehmbar festgesetzt werden können. Eine Anzahl an Befestigungspositionen kann demnach gegenüber einer Anzahl an Klemm- und Greifelementen vergrößert sein, so dass jedes Klemm- und Greifelement der mindestens zwei jeweils hängend angeordneten Klemm- und Greifelemente an unterschiedlichen Befestigungspositionen angeordnet bzw. abnehmbar festgesetzt werden kann.

Nach der Erfindung sind die mindestens zwei Klemm- und Greifelemente werkzeuglos an den mehreren verschiedenen Befestigungspositionen festsetzbar und/oder werkzeuglos von ihrer jeweiligen Befestigungsposition abnehmbar.

Insbesondere kann es sein, dass die mindestens zwei Klemm- und Greifelemente an ihrer jeweiligen Befestigungsposition werkzeuglos eingehängt werden können und/oder dass die mindestens zwei Klemm- und Greifelemente aus ihrer jeweiligen Befestigungsposition werkzeuglos ausgehängt werden können.

Die Klemm- und Greifeinrichtung kann für die mindestens zwei Klemm- und Greifelemente jeweils ein separates und vollständig vom jeweiligen Klemm- und Greifelement mechanisch trennbares Zwischenstück umfassen, über welches jeweilige Zwischenstück die mindestens zwei Klemm- und Greifelemente an ihrer jeweiligen Befestigungsposition werkzeuglos eingehängt werden können und/oder mit welchem jeweiligen Zwischenstück die mindestens zwei Klemm- und Greifelementes aus ihrer jeweiligen Befestigungsposition werkzeuglos ausgehängt werden können.

Bewährt haben sich Ausführungsformen, bei welchen jede der Befestigungspositionen einen Bolzen oder Stift ausbildet. Die Bolzen bzw. Stifte der Befestigungspositionen können jeweils horizontal orientiert sein. Somit können Längsrichtungen der Bolzen bzw. Stifte parallel zueinander verlaufen.

Die mindestens zwei Klemm- und Greifelemente oder die Zwischenstücke können jeweils eine gegenüber den Bolzen bzw. Stiften der Befestigungspositionen korrespondierende Nut umfassen, in welcher jeweiligen Nut der Bolzen oder Stift einer jeweiligen Befestigungsposition zum Festsetzen des jeweiligen Klemm- und Greifelementes aufgenommen werden kann.

Es kann sein, dass die mindestens zwei Klemm- und Greifelemente oder die Zwischenstücke jeweils einen manuell betätigbaren Sicherungsmechanismus umfassen, welcher zum formschlüssigen Halten des jeweiligen Bolzens oder des jeweiligen Stiftes in der durch das jeweilige Klemm- und Greifelement bzw. das jeweilige Zwischenstück ausgebildeten Nut vorgesehen ist.

Weiter können die mindestens zwei Klemm- und Greifelemente jeweils einen Sicherungsmechanismus umfassen, über welchen ein in einer jeweiligen Nut aufgenommener Bolzen bzw. Stift formschlüssig in der Nut des jeweiligen in einer Befestigungsposition festgesetzten Klemm- und Greifelementes gehalten werden kann.

Hierbei kann vorgesehen sein, dass der jeweilige Sicherungsmechanismus einen federkraftbeaufschlagten bzw. mit einer Rückstellkraft beaufschlagten Sicherungshebel besitzt, welcher unter Zuhilfenahme seiner Federkraft bzw. Rückstellkraft den in der Nut aufgenommenen Bolzen bzw. Stift formschlüssig in der Nut hält. Alternativ oder ergänzend kann es sein, dass der jeweilige Sicherungsmechanismus einen federkraftbeaufschlagten bzw. mit einer Rückstellkraft beaufschlagten Sicherungshebel besitzt, welcher zur Abnahme seines jeweiligen Klemm- und Greifelementes aus der Befestigungsposition unter Überwindung der Federkraft bzw. Rückstellkraft und Freigabe der Nut geschwenkt werden kann.

Die Klemm- und Greifeinrichtung kann einen ersten Schlitten mit mehreren Befestigungspositionen für mindestens ein erstes Klemm- und Greifelement besitzen. Weiter kann die Klemm- und Greifeinrichtung einen zweiten Schlitten mit mehreren weiteren Befestigungspositionen für mindestens ein zweites Klemm- und Greifelement besitzen. Hierbei können der erste Schlitten und der zweite Schlitten zum gemeinsamen temporären Entgegennehmen eines Artikels oder mehrerer Artikel über das am ersten Schlitten und am zweiten Schlitten in einer jeweiligen Befestigungsposition festgesetzte mindestens eine erste Klemm- und Greifelement und mindestens eine zweite Klemm- und Greifelement in vorzugsweise horizontaler Richtung relativ zueinander bewegbar sein. Der erste Schlitten und/oder der zweite Schlitten können für ihre Relativbewegung mit einer als Bestandteil der Klemm- und Greifeinrichtung ausgebildeten Linearführung in Verbindung stehen. Die Linearführung kann, wie vorhergehend bereits erwähnt, über eine Basis des Klemm- und Greifeinrichtung bereitgestellt werden.

Wie schon oben erwähnt betrifft die Erfindung ein System zum Handhaben von Artikeln gemäß Anspruch 1. Das System umfasst mindestens eine Horizontalfördereinrichtung, entlang welcher die zu manipulierenden Artikel bewegbar sind. Die mindestens eine Horizontalfördereinrichtung kann beispielsweise durch mindestens ein umlaufend angetriebenes Transportband ausgebildet sein.

Weiter umfasst das System wenigstens einen Manipulator. Der wenigstens eine Manipulator kann durch wenigstens einen Deltakinematik-Roboter ausgebildet sein. Bestandteil des Systems ist zudem mindestens eine Klemm- und Greifeinrichtung gemäß einem Ausführungsbeispiel der vorherigen Beschreibung. Die mindestens eine Klemm- und Greifeinrichtung wird durch den wenigstens einen Manipulator getragen bzw. ist ggf. als mindestens ein Arbeitswerkzeug des wenigstens einen Manipulators ausgebildet.

Der wenigstens eine Manipulator ist derart ansteuerbar, dass der wenigstens eine Manipulator mittels der mindestens einen Klemm- und Greifeinrichtung mehrere via die mindestens eine Horizontalfördereinrichtung bewegte Artikel in eine relative Ausrichtung zueinander überführen kann, welche insbesondere auf eine aus diesen mehreren Artikeln zu bildende palettierfähige Lage oder eine aus diesen mehreren Artikeln durch Drehen und/oder Verschieben zur bildende bestimmte Gruppierung und/oder durch Drehen und/oder Verschieben zu bildende bestimmte Verteilung abgestimmt ist.

In bevorzugten Ausführungsformen kann das System eine an den wenigstens einen Manipulator gekoppelte Steuerungseinheit sowie mindestens eine Sensorik umfassen. Es kann hierbei sein, dass die mindestens eine Sensorik zur Überprüfung einer ordnungsgemäßen Festsetzung der mindestens zwei Klemm- und Greifelemente an ihrer jeweiligen Befestigungsposition mit der Steuerungseinheit in Verbindung steht. Weiter kann die Steuerungseinheit ggf. bei einer im Rahmen der Überprüfung festgestellten nicht ordnungsgemäßen Festsetzung wenigstens eines Klemm- und Greifelementes eine Ansteuerung des wenigstens einen Manipulators unterbinden und/oder einen für einen Bediener erkennbaren Hinweis zur nicht ordnungsgemäß erfolgten Festsetzung des wenigstens einen Klemm- und Greifelementes ausgeben.

Die nachfolgenden Ausführungen fassen nochmal einige Aspekte der zuvor bereits in verschiedenen Ausführungsvarianten erläuterten Erfindung zusammen, konkretisieren einige Aspekte, sollen jedoch nicht im Widerspruch zu den bereits gemachten Ausführungen gesehen werden, sondern in Zusammenschau, bei Zweifeln ggf. als speziellere Ausführungsvarianten oder Abwandlungen. So kann, wie bereits oben mehrfach erwähnt, die erfindungsgemäße Klemm- und Greifeinrichtung Teil eines Manipulators sein, welcher bspw. als Portalroboter ausgebildet sein kann, welcher jedoch insbesondere als Deltakinematik-Roboter ausgebildet sein kann. Die Klemm- und Greifeinrichtung kann insbesondere ein Arbeitswerkzeug des Manipulators sein, welcher als Portalroboter oder als Deltakinematik-Roboter ausgebildet ist.

Über diesen Manipulator bzw. den Portal- oder Deltakinematik-Roboter kann die Klemm- und Greifeinrichtung in mehreren unterschiedlichen horizontalen Raumrichtungen versetzt werden und hierbei durch Getränkebehältnisse oder andere zu handhabende Gegenstände ausgebildete Artikel in eine relative Orientierung zueinander überführen, die bspw. auf eine aus den jeweiligen Artikeln zu bildende vollständige palettierfähige Lage ausgerichtet sein kann, wobei ein solcher Einsatz des Systems grundsätzlich nur beispielhaft zu verstehen ist. So kann es auch sein, dass das System beispielsweise dazu ausgebildet ist, Gebinde während ihrer fortlaufenden Bewegung zu gruppieren bzw. aus einer ersten Gruppierung in eine zweite Gruppierung zu überführen. Um die mehreren Artikel in eine Orientierung zu überführen, die auf eine jeweilige aus den mehreren Artikel zu bildende vollständige palettierfähige Lage ausgerichtet ist bzw. um eine bestimmte Gruppierung aus den mehreren Artikeln zu erzeugen, besitzt die Klemm- und Greifeinrichtung mehrere Klemm- und Greifelemente. Die typischerweise paarweise miteinander zusammenwirkenden Klemm- und Greifelemente können mittels des Manipulators bzw. des Portal- oder Deltakinematik-Roboters in Richtung jeweiliger zu erfassender Artikel bewegt werden und jeweilige zu erfassende Artikel zwischen sich aufnehmen. Hierauf folgend führen die Klemm- und Greifelemente eine Zustellbewegung aus, erfassen den jeweiligen sich zwischen den Klemm- und Greifelementen befindlichen Artikel klemmend und führen den jeweiligen Artikel unter weiterhin ausgebildeter klemmender Anlage in eine relative Orientierung gegenüber weiteren Artikel, wodurch dieser Artikel gegenüber den weiteren Artikeln in eine Position gebracht wird, die auf eine aus diesem Artikel und weiteren Artikeln zu bildende palettierfähige Lage abgestimmt ist. Hierbei kann der Manipulator bei Bedarf eine Drehbewegung für die Klemm- und Greifelemente sowie den oder die über die Klemm- und Greifelemente entgegengenommenen Artikel herbeiführen.

Die Zustellbewegung, über welche die Klemm- und Greifeinrichtung mittels des Paares oder der mehreren Paare der Klemm- und Greifelemente jeweilige Artikel erfasst, kann wahlweise bzw. in diversen Ausführungsformen auch entfallen. So kann es beispielsweise sein, dass Artikel zwischen dem jeweiligen Paar an Klemm- und Greifelementen angeordnet werden, so dass diese Artikel lediglich formschlüssig durch die Klemm- und Greifelemente entgegengenommen sind und anschließend mittels der Klemm- und Greifeinrichtung manipuliert bzw. beispielsweise gedreht und/oder gegenüber weiteren Artikeln versetzt werden. Eine Relativbewegung eines Paares an zur Entgegennahme von Artikeln zusammenwirkenden Klemm- und Greifelementen ist in solchen Ausführungsformen nicht vorgesehen.

Während des Entgegennehmens des jeweiligen Artikels über die Klemm- und Greifeinrichtung bzw. die Klemm- und Greifelemente können diese Artikel und weitere für die jeweilige palettierfähige Lage vorgesehene Artikel bzw. Getränkebehältnisse auf einer als Bestandteil des Systems ausgebildeten Horizontalfördereinrichtung stehen und werden hierbei mittels der Horizontalfördereinrichtung vorzugsweise unterbrechungsfrei fortbewegt. Ein Förderbetrieb der Horizontalfördereinrichtung muss hierbei zu keinem Zeitpunkt angehalten werden, so dass die Horizontalfördereinrichtung kontinuierlich Artikel transportieren kann. Die Klemm- und Greifeinrichtung sowie der Manipulator sind oberhalb der Horizontalfördereinrichtung angeordnet.

Eine als Bediener oder Maschinenführer fungierende Person kann sich zudem in unmittelbarer Umgebung des Systems sowie im Bereich der als Bestandteil des Systems ausgebildeten Horizontalfördereinrichtung befinden. Über den Manipulator bzw. den Deltakinematik-Roboter kann die Klemm- und Greifeinrichtung in eine Serviceposition bzw. in einen Servicebereich bewegt werden, in welcher sich die Klemm- und Greifeinrichtung im Zugriffsbereich der Person bzw. des Bedieners befindet. In der Serviceposition befindet sich die Klemm- und Greifeinrichtung weiterhin zumindest abschnittsweise oberhalb der erwähnten Horizontalfördereinrichtung. Wahlweise können die an der Klemm- und Greifeinrichtung befindlichen Klemm- und Greifelemente bei angefahrener Serviceposition zumindest abschnittsweise seitlich über die Horizontalfördereinrichtung hinausragen, wodurch ein Zugriff auf die Klemm- und Greifelemente für den Bediener erleichtert sein kann.

Wie nachfolgend noch beschrieben, kann der Bediener die Klemm- und Greifelemente von der in die Serviceposition gefahrenen Klemm- und Greifeinrichtung wahlweise händisch bzw. manuell abnehmen und unter Berücksichtigung einer jeweiligen Dimensionierung und/oder Anzahl über die Klemm- und Greifeinrichtung nachfolgend entgegenzunehmender Artikel selektiv an einer jeweiligen Befestigungsposition aus einer Vielzahl an über die Klemm- und Greifeinrichtung bereitgestellten Befestigungspositionen anbringen bzw. festsetzen.

Um die erwähnte Serviceposition anzufahren, kann der Manipulator bzw. Deltakinematik-Roboter über eine Steuerungseinheit in passender Weise betätigt oder gesteuert werden. Die Steuerungseinheit kann über ein beispielsweise als Touchscreen ausgebildetes Eingabeinstrument verfügen, wobei der Bediener über das Eingabeinstrument bzw. den Touchscreen ggf. veranlassen kann, dass die Klemm- und Greifeinrichtung über den Manipulator bzw. Deltakinematik-Roboter in die Serviceposition bewegt wird.

Es kann außerdem sinnvoll sein, dass das System einen Sensor wie etwa eine Kamera umfasst, über welche die bereits erwähnte Steuerungseinheit erkennen kann, wenn sich ein Bediener nach angefahrener Serviceposition der Klemm- und Greifeinrichtung im Bereich der Klemm- und Greifeinrichtung befindet und ggf. Klemm- und Greifelemente von der Klemm- und Greifeinrichtung abnimmt und/oder Klemm- und Greifelemente an der Klemm- und Greifeinrichtung anbringt bzw. festsetzt. Sofern dies der Fall ist, kann die Steuerungseinheit eine Bewegung der Klemm- und Greifeinrichtung über den Manipulator bzw. Deltakinematik-Roboter unterbinden bzw. blockieren, so dass hierdurch kein Risiko ungewollter Verletzungen für den Bediener bestehen kann.

Auch ist es denkbar, dass das System mit Hilfe eines solchen Sensors bzw. dieser Kamera oder mittels eines weiteren Sensors bzw. einer weiteren Kamera über die Steuerungseinheit feststellen und/oder erkennen kann, ob ein jeweiliger Bediener Klemm- und Greifelemente in der jeweiligen Befestigungsposition passend festgesetzt hat. Erkennt bzw. stellt die Steuerungseinheit hierbei fest, dass ein Klemm- und Greifelement oder mehrere Klemm- und Greifelemente nicht ordnungsgemäß in ihrer jeweiligen Befestigungsposition festgesetzt wurden, so kann die Steuerungseinheit eine Bewegung der Klemm- und Greifeinrichtung über den Manipulator bzw. Deltakinematik-Roboter unterbinden bzw. blockieren. Die Klemm- und Greifeinrichtung kann sich hierbei weiterhin in der bereits angefahrenen Serviceposition befinden. Denkbar ist insbesondere, dass die Steuerungseinheit eine Anzeige bzw. ein Display besitzt, über welches die Steuerungseinheit für den Bediener Informationen zu jeweils passend bzw. jeweils nicht passend an der jeweiligen Befestigungsposition festgesetzten Klemm- und Greifelementen darstellen kann. Erkennt ein Bediener über die Anzeige bzw. das Display, dass ein Klemm- und Greifelement nicht passend an seiner jeweiligen Befestigungsposition festgesetzt wurde, so kann der jeweilige Bediener das jeweilige nicht passend an seiner jeweiligen Befestigungsposition festgesetzt Klemm- und Greifelemente ordnungsgemäß an seiner jeweiligen Befestigungsposition installieren bzw. anordnen.

Weiterhin kann der bereits beschriebene Manipulator, welcher als Deltakinematik-Roboter oder als Portalroboter ausgebildet sein kann, eine untere Aufhängung bzw. einen sog. Tool Center Point zur hängenden Befestigung der Klemm- und Greifeinrichtung über eine als Bestandteil der Klemm- und Greifeinrichtung ausgebildete Basis aufweisen. Über eine solche Basis ist die Klemm- und Greifeinrichtung somit mechanisch an die untere Aufhängung bzw. den Tool Center Point des Manipulators gekoppelt. Zudem stellt die Basis eine Linearführung für einen ersten Schlitten und einen zweiten Schlitten bereit. Der erste Schlitten und zweite Schlitten können unter Zuhilfenahme der eine Linearführung bereitstellenden Basis jeweils in horizontaler Richtung und relativ zueinander bewegt werden. Mit jedem der Schlitten stehen jeweils separate Klemm- und Greifelemente in Verbindung. Werden die Schlitten relativ zueinander bewegt, können am ersten Schlitten angeordnete Klemm- und Greifelemente daher mit am zweiten Schlitten angeordneten Klemm- und Greifelementen zusammenwirken, um Artikel zwischen sich temporär und klemmend entgegenzunehmen. Durch die Relativbewegung des ersten Schlittens gegenüber dem zweiten Schlitten führen somit sämtliche vom ersten Schlitten getragene Klemm- und Greifelemente gegenüber sämtlichen vom zweiten Schlitten getragenen Klemm- und Greifelementen eine Zustellbewegung aus und erfassen hierbei Artikel paarweise. Gegenüberliegende Breitseitenflächen der zur Entgegennahme von Artikeln paarweise zusammenwirkenden Klemm- und Greifelemente weisen hierbei zueinander. Um diese Relativbewegung für den ersten Schlitten und den zweiten Schlitten zu bewirken, ist in bevorzugten Ausführungsformen ein Riemen vorgesehen, mit welchem der erste Schlitten und der zweite Schlitten jeweils in Verbindung stehen. Über den Manipulator bzw. Deltakinematik-Roboter kann der Riemen angetrieben werden, woraus resultierend der erste Schlitten und der zweite Schlitten relativ zueinander verfahren werden. Bewährt haben sich hierbei Ausführungsformen, bei welchen der Manipulator bzw. Deltakinematik-Roboter eine Welle besitzt, die zum Antrieb des nicht mit dargestellten Riemens und hieraus resultierender Relativbewegung des ersten Schlittens gegenüber dem zweiten Schlitten drehend bewegt wird.

Bedarfsweise kann der erste Schlitten eine Vielzahl an Bolzen umfassen, welche Vielzahl an Bolzen mehrere unterschiedliche Befestigungspositionen für die für den ersten Schlitten vorgesehenen Klemm- und Greifelemente ausbildet. Auch kann der zweite Schlitten eine Vielzahl an Bolzen umfassen, welche Vielzahl an Bolzen mehrere unterschiedliche Befestigungspositionen für die für den zweiten Schlitten vorgesehenen Klemm- und Greifelemente ausbildet. Auf diese Weise können die Klemm- und Greifelemente in jeweils unterschiedlichen Befestigungspositionen am jeweiligen Schlitten festgesetzt werden und hierzu selektiv in die jeweilige Befestigungsposition bzw. in den die jeweilige Befestigungsposition ausbildenden Bolzen eingehängt werden.

Je nach Ausführungsvariante können bspw. drei Paare mit jeweils zwei Klemm- und Greifelementen vorgesehen sein, welche von dem ersten Schlitten und dem zweiten Schlitten getragen werden und von welchen ein jeweiliges Paar einen Artikel oder eine Reihe an Artikeln temporär und klemmend entgegennehmen kann. Sofern ein Verpackungsbetrieb umgestellt wird, kann es sein, dass sich über die Klemm- und Greifeinrichtung nachfolgend entgegenzunehmende Artikel von bis dahin entgegenzunehmenden Artikeln in ihrer Geometrie unterscheiden. Die Klemm- und Greifeinrichtung ist sodann mit der zunächst gewählten Anordnung ihrer Klemm- und Greifelemente möglicherweise nicht mehr dazu geeignet, diese für den nachfolgenden Verpackungsbetrieb vorgesehenen Artikel entsprechend entgegenzunehmen, da sich die Position und/oder Anzahl der Klemm- und Greifelemente nicht für die nachfolgend entgegenzunehmenden Artikel mit ihrer entsprechenden Geometrie eignet. In der Praxis wird bis dato die gesamte Klemm- und Greifeinrichtung hierfür am Manipulator ausgetauscht. Da die gesamte Klemm- und Greifeinrichtung jedoch eine große Masse besitzt, ist ein solcher Austausch umständlich. Mittels der Klemm- und Greifeinrichtung kann, wie nachfolgend beschrieben, ein Ausrüsten bzw. Anpassen der Klemm- und Greifeinrichtung unter Berücksichtigung einer bestimmten Anzahl und/oder Ausbildung entgegenzunehmender Artikel auf einfache Art und Weise sowie in kurzer Zeit erfolgen. Hierdurch kann zeitoptimiert und einfach eine jeweilige Anpassung der Klemm- und Greifeinrichtung an unterschiedliche Verpackungsbetriebe bzw. unterschiedliche zu manipulierende Artikel erfolgen.

Im Hinblick auf den konstruktiven Aufbau des ersten Schlittens kann zudem festgehalten werden, dass der erste Schlitten zwei parallel zueinander verlaufende Tragschienen besitzen kann. An jeder der parallel zueinander verlaufenden Tragschienen können Befestigungspositionen ausbildende Bolzen angeordnet sein. Um ein jeweiliges für den ersten Schlitten vorgesehenes Klemm- und Greifelement in einer jeweiligen Befestigungsposition anzuordnen, wird ein Zwischenstück sowohl in den Bolzen einer ersten der beiden Tragschienen des ersten Schlittens als auch in den Bolzen der weiteren der beiden Tragschienen eingehängt. Somit wird das Zwischenstück zusammen mit dem jeweiligen mit dem Zwischenstück in Verbindung stehenden und für den ersten Schlitten vorgesehenen Klemm- und Greifelement gemeinsam über die beiden parallel zueinander orientierten Tragschienen hängend gehalten. Ein entsprechender konstruktiver Aufbau gilt für den zweiten Schlitten.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine schematische Ansicht einer Ausführungsform eines erfindungsgemäßen Systems sowie einer Ausführungsform einer erfindungsgemäßen Klemm- und Greifeinrichtung.
Fig. 2 zeigt weitere Aspekte der Ausführungsform des Systems aus Fig. 1 sowie der Klemm- und Greifeinrichtung aus der Ausführungsform nach Fig. 1.
Fig. 3 zeigt eine schematische Perspektivansicht einer Ausführungsform einer erfindungsgemäßen Klemm- und Greifeinrichtung.
Fig. 4 zeigt weitere Aspekte der Klemm- und Greifeinrichtung des Ausführungsbeispiels aus Fig. 3.
Figuren 5 bis 7 zeigen jeweils ein Zwischenstück sowie einzelne Schrittes des Abnehmens des Zwischenstücks von einer Befestigungsposition.
Fig. 8 zeigt weitere Details der Klemm- und Greifeinrichtung aus dem Ausführungsbeispiel aus Fig. 3.
Figuren 9 bis 11 zeigen jeweils ein Zwischenstück sowie einzelne Schrittes des Festsetzens an einer vorher ausgewählten Befestigungsposition.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die Erfindung ausgestaltet sein kann und stellen keine abschließende Begrenzung dar. Auch sind die nachfolgend beschriebenen Merkmale jeweils nicht in engem Zusammenhang mit weiteren Merkmalen des jeweiligen Ausführungsbeispiels zu verstehen sondern können jeweils im allgemeinen Zusammenhang vorgesehen sein bzw. hierfür Verwendung finden.

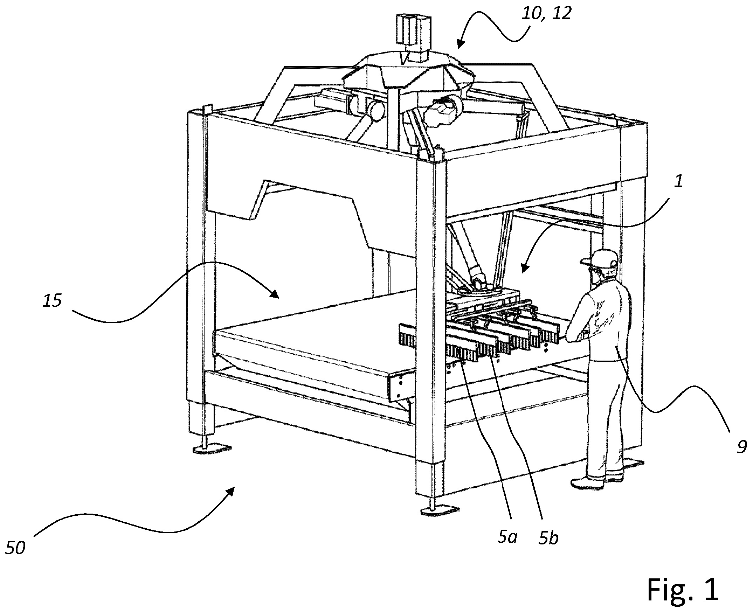

Die Fig. 1 zeigt eine schematische Ansicht einer Ausführungsform eines erfindungsgemäßen Systems 50 sowie einer Ausführungsform einer erfindungsgemäßen Klemm- und Greifeinrichtung 1. Die Klemm- und Greifeinrichtung 1 wird in Fig. 1 von einem Manipulator 10, welcher als Deltakinematik-Roboter 12 ausgebildet ist, bzw. ist ein Arbeitswerkzeug des Manipulators 10, welcher als Deltakinematik-Roboter ausgebildet ist.

Über den Manipulator 10 bzw. Deltakinematik-Roboter 12 kann die Klemm- und Greifeinrichtung 1 in mehreren unterschiedlichen horizontalen Raumrichtungen versetzt werden und hierbei nicht weiter dargestellte und durch Getränkebehältnisse ausgebildete Artikel in eine relative Orientierung zueinander überführen, die auf eine aus den jeweiligen Artikeln zu bildende vollständige palettierfähige Lage ausgerichtet ist. Dieser Einsatz eines Systems 50 ist vorliegend beispielhaft zu verstehen. So kann es auch sein, dass das System 50 gemäß der Ausführungsform nach Fig. 1 beispielsweise dazu ausgebildet ist, Gebinde während ihrer fortlaufenden Bewegung zu gruppieren bzw. aus einer ersten Gruppierung in eine zweite Gruppierung zu überführen. Um die mehreren nicht weiter mit dargestellten Artikel in eine Orientierung zu überführen, die auf eine jeweilige aus den mehreren Artikel zu bildende vollständige palettierfähige Lage ausgerichtet ist bzw. um eine bestimmte Gruppierung aus den mehreren Artikeln zu erzeugen, besitzt die Klemm- und Greifeinrichtung 1 mehrere Klemm- und Greifelemente. Auf zwei bzw. ein Paar an Klemm- und Greifelementen wird in Fig. 1 mit Ziffern 5a und 5b verwiesen. Die paarweise miteinander zusammenwirkenden Klemm- und Greifelemente 5a und 5b können mittels des Manipulators 10 bzw. Deltakinematik-Roboters 12 in Richtung jeweiliger zu erfassender Artikel bewegt werden und jeweilige zu erfassende Artikel zwischen sich aufnehmen. Hierauf folgend führen die Klemm- und Greifelemente 5a und 5b eine Zustellbewegung aus, erfassen den jeweiligen sich zwischen den Klemm- und Greifelementen 5a und 5b befindlichen Artikel klemmend und führen den jeweiligen Artikel unter weiterhin ausgebildeter klemmender Anlage in eine relative Orientierung gegenüber weiteren Artikel, wodurch dieser Artikel gegenüber den weiteren Artikeln in eine Position gebracht wird, die auf eine aus diesem Artikel und weiteren Artikeln zu bildende palettierfähige Lage abgestimmt ist. Hierbei kann der Manipulator 10 bei Bedarf eine Drehbewegung für die Klemm- und Greifelemente 5a und 5b sowie den oder die über die Klemm- und Greifelemente 5a und 5b entgegengenommenen Artikel herbeiführen.

Die Zustellbewegung, über welche die Klemm- und Greifeinrichtung 1 mittels des Paares an Klemm- und Greifelementen 5a und 5b jeweilige Artikel erfasst, kann in diversen Ausführungsformen auch entfallen. So kann es beispielsweise sein, dass Artikel zwischen dem jeweiligen Paar an Klemm- und Greifelementen 5a und 5b angeordnet werden, so dass diese Artikel lediglich formschlüssig durch die Klemm- und Greifelemente 5a und 5b entgegengenommen sind und anschließend mittels der Klemm- und Greifeinrichtung 1 manipuliert bzw. beispielsweise gedreht und/oder gegenüber weiteren Artikeln versetzt werden. Eine Relativbewegung eines Paares an zur Entgegennahme von Artikeln zusammenwirkenden Klemm- und Greifelementen 5a und 5b ist in solchen Ausführungsformen nicht vorgesehen.

Während des Entgegennehmens des jeweiligen Artikels über die Klemm- und Greifeinrichtung 1 bzw. die Klemm- und Greifelemente 5a und 5b stehen diese Artikel und weitere für die jeweilige palettierfähige Lage vorgesehene Artikel bzw. Getränkebehältnisse auf einer als Bestandteil des Systems 1 ausgebildeten Horizontalfördereinrichtung 15 auf und werden mittels der Horizontalfördereinrichtung 15 unterbrechungsfrei fortbewegt. Ein Förderbetrieb der Horizontalfördereinrichtung 15 wird hierbei zu keinem Zeitpunkt angehalten, so dass die Horizontalfördereinrichtung 15 kontinuierlich Artikel transportiert. Die Klemm- und Greifeinrichtung 1 sowie der Manipulator 10 sind oberhalb der Horizontalfördereinrichtung 15 angeordnet.

Ein Bediener 9 befindet sich zudem in unmittelbarer Umgebung des Systems 50 sowie im Bereich der als Bestandteil des Systems 50 ausgebildeten Horizontalfördereinrichtung 15. Über den Manipulator 10 bzw. den Deltakinematik-Roboter 12 wurde die Klemm- und Greifeinrichtung in die in Fig. 1 dargestellte Serviceposition bzw. in den in Fig. 1 dargestellten Servicebereich bewegt, in welcher sich die Klemm- und Greifeinrichtung 1 im Zugriffsbereich des Bedieners 9 befindet. In der Serviceposition befindet sich die Klemm- und Greifeinrichtung 1 weiterhin zumindest abschnittsweise oberhalb der Horizontalfördereinrichtung 15. Fig. 1 zeigt zudem, dass bereits an der Klemm- und Greifeinrichtung 1 befindliche Klemm- und Greifelemente 5a und 5b bei angefahrener Serviceposition nach Fig. 1 abschnittsweise seitlich über die Horizontalfördereinrichtung 15 hinausragen. Hierdurch wird ein Zugriff auf die Klemm- und Greifelemente 5a und 5b für den Bediener 9 erleichtert.

Wie nachfolgend noch beschrieben, kann der Bediener 9 Klemm- und Greifelemente 5a bzw. 5b von der in die Serviceposition gefahrenen Klemm- und Greifeinrichtung 1 händisch bzw. manuell abnehmen und unter Berücksichtigung einer jeweiligen Dimensionierung und/oder Anzahl über die Klemm- und Greifeinrichtung 1 nachfolgend entgegenzunehmender Artikel selektiv an einer jeweiligen Befestigungsposition aus einer Vielzahl an über die Klemm- und Greifeinrichtung 1 bereitgestellten Befestigungspositionen anbringen bzw. festsetzen.

Um die Serviceposition nach Fig. 1 anzufahren, kann der Manipulator 10 bzw. Deltakinematik-Roboter 12 über eine Steuerungseinheit hierzu betätigt werden. Die Steuerungseinheit kann über ein beispielsweise als Touchscreen ausgebildetes Eingabeinstrument verfügen, wobei der Bediener 9 über das Eingabeinstrument bzw. Touchscreen ggf. veranlassen kann, dass die Klemm- und Greifeinrichtung 1 über den Manipulator 10 bzw. Deltakinematik-Roboter 12 in die in Fig. 1 dargestellte Serviceposition bewegt wird.

Es kann sein, dass das System 50 einen Sensor, wie beispielsweise eine Kamera, umfasst, über welche die bereits erwähnte Steuerungseinheit erkennen kann, wenn sich ein Bediener 9 nach angefahrener Serviceposition der Klemm- und Greifeinrichtung 1 im Bereich der Klemm- und Greifeinrichtung 1 befindet und ggf. Klemm- und Greifelemente 5a bzw. 5b von der Klemm- und Greifeinrichtung 1 abnimmt und/oder Klemm- und Greifelemente 5a bzw. 5b an der Klemm- und Greifeinrichtung 1 festsetzt. Sofern dies der Fall ist, kann die Steuerungseinheit eine Bewegung der Klemm- und Greifeinrichtung 1 über den Manipulator 10 bzw. Deltakinematik-Roboter 12 unterbinden bzw. blockieren, so dass hierdurch kein Risiko ungewollter Verletzungen für den Bediener 9 bestehen.

Auch ist denkbar, dass das System 50 mittels dieses Sensors bzw. dieser Kamera oder mittels eines weiteren Sensors bzw. einer weiteren Kamera über die Steuerungseinheit feststellen und/oder erkennen kann, ob eine jeweiliger Bediener 9 Klemm- und Greifelemente 5a bzw. 5b in der jeweiligen Befestigungsposition passend festgesetzt hat. Erkennt bzw. stellt die Steuerungseinheit hierbei fest, dass ein Klemm- und Greifelement 5a bzw. 5b oder mehrere Klemm- und Greifelemente 5aq bzw. 5b nicht ordnungsgemäß in ihrer jeweiligen Befestigungsposition festgesetzt wurden, so kann die Steuerungseinheit eine Bewegung der Klemm- und Greifeinrichtung 1 über den Manipulator 10 bzw. Deltakinematik-Roboter 12 unterbinden bzw. blockieren. Die Klemm- und Greifeinrichtung 1 kann sich hierbei weiterhin in der bereits angefahrenen Serviceposition befinden. Denkbar ist insbesondere, dass die Steuerungseinheit eine Anzeige bzw. ein Display besitzt, über welches die Steuerungseinheit für den Bediener 9 Informationen zu jeweils passend bzw. jeweils nicht passend an der jeweiligen Befestigungsposition festgesetzten Klemm- und Greifelementen 5a bzw. 5b darstellen kann. Erkennt ein Bediener über die Anzeige bzw. das Display, dass ein Klemm- und Greifelement 5a bzw. 5b nicht passend an seiner jeweiligen Befestigungsposition festgesetzt wurde, so kann das jeweilige Bediener 9 das jeweilige nicht passend an seiner jeweiligen Befestigungsposition festgesetzt Klemm- und Greifelemente 5a bzw. 5b ordnungsgemäß an seiner jeweiligen Befestigungsposition installieren bzw. anordnen.

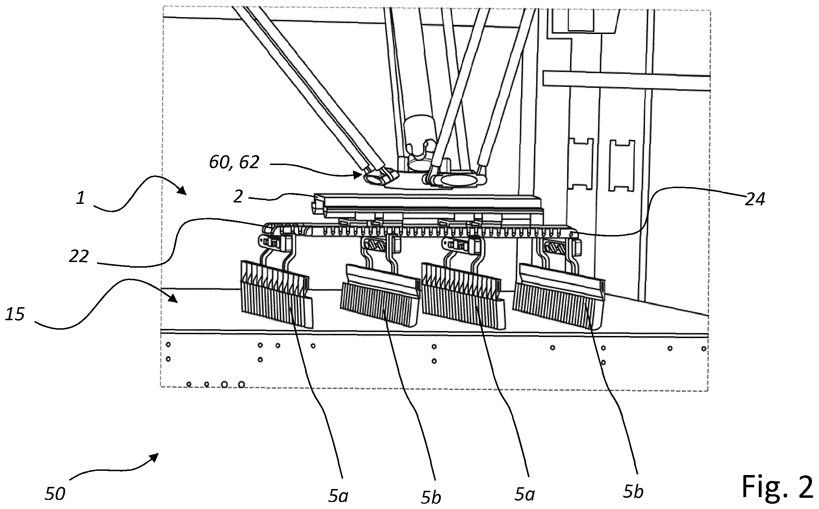

Die Fig. 2 zeigt weitere Aspekte der Ausführungsform des Systems 50 aus Fig. 1 sowie der Klemm- und Greifeinrichtung 1 aus der Ausführungsform nach Fig. 1. Der bereits in Fig. 1 mit dargestellte und beschriebene Manipulator 10, welcher als Deltakinematik-Roboter 12 ausgebildet ist, besitzt eine untere Aufhängung 60 bzw. einen Tool Center Point 62 zur hängenden Befestigung der Klemm- und Greifeinrichtung 1 über eine als Bestandteil der Klemm- und Greifeinrichtung 1 ausgebildete Basis 2.

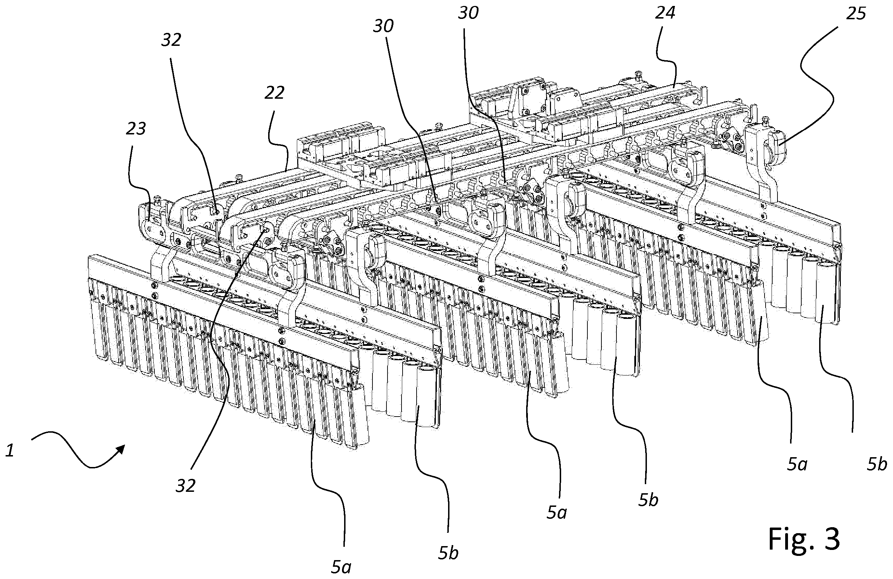

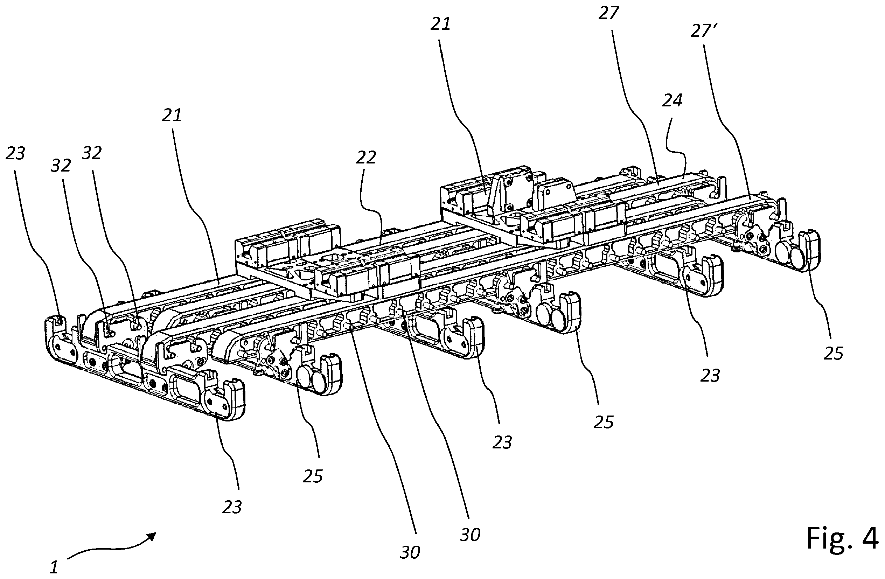

Über die Basis 2 ist die Klemm- und Greifeinrichtung 1 somit mechanisch an die untere Aufhängung 60 bzw. den Tool Center Point 62 des Manipulators 10 gekoppelt. Zudem stellt die Basis 2 eine Linearführung für einen ersten Schlitten 22 und einen zweiten Schlitten 24 bereit, die insbesondere in den Figuren 3 und 4 gut zu erkennen sind. Der nachfolgend noch in den Figuren 3 und 4 dargestellte und detailliert beschriebene erste Schlitten 22 und zweite Schlitten 24 können unter Zuhilfenahme der eine Linearführung bereitstellenden Basis 2 jeweils in horizontaler Richtung und relativ zueinander bewegt werden. Mit dem ersten Schlitten 22 stehen hierbei die Klemm- und Greifelemente in Verbindung, auf welche Ziffer 5a jeweils verweist. Mit dem zweiten Schlitten 24 stehen die Klemm- und Greifelemente in Verbindung, auf welche Ziffer 5b jeweils verweist. Werden die Schlitten 22 und 24 relativ zueinander bewegt, können am ersten Schlitten 22 angeordnete Klemm- und Greifelemente 5a daher mit am zweiten Schlitten 24 angeordneten Klemm- und Greifelementen 5b zusammenwirken, um Artikel zwischen sich temporär und klemmend entgegenzunehmen. Durch die Relativbewegung des ersten Schlittens 22 gegenüber dem zweiten Schlitten 24 führen somit sämtliche vom ersten Schlitten 22 getragene Klemm- und Greifelemente 5a gegenüber sämtlichen vom zweiten Schlitten 24 getragenen Klemm- und Greifelementen 5b eine Zustellbewegung aus und erfassen hierbei Artikel paarweise. Gegenüberliegende Breitseitenflächen der zur Entgegennahme von Artikeln paarweise zusammenwirkenden Klemm- und Greifelementen 5a bzw. 5b weisen hierbei zueinander. Um diese Relativbewegung für den ersten Schlitten 22 und den zweiten Schlitten 24 zu bewirken, ist in bevorzugten Ausführungsformen ein Riemen vorgesehen, mit welchem der erste Schlitten 22 und der zweite Schlitten 24 in Verbindung stehen. Über den Manipulator 10 bzw. Deltakinematik-Roboter 12 kann der Riemen angetrieben werden, woraus resultierend der erste Schlitten 22 und der zweite Schlitten 24 relativ zueinander verfahren werden. Bewährt haben sich hierbei Ausführungsformen, bei welchen der Manipulator 10 bzw. Deltakinematik-Roboter 12 eine Welle besitzt, die zum Antrieb des nicht mit dargestellten Riemens und hieraus resultierender Relativbewegung des ersten Schlittens 22 gegenüber dem zweiten Schlittens 24 drehend bewegt wird.

Die Fig. 3 zeigt eine schematische Perspektivansicht einer Ausführungsform einer erfindungsgemäßen Klemm- und Greifeinrichtung 1. In Fig. 3 sind nochmals der erste Schlitten 22 und der zweite Schlitten 24 zu erkennen, welche zusammen mit ihren jeweiligen Klemm- und Greifelementen 5a und 5b relativ zueinander bewegt werden können. Wie in Fig. 3 gezeigt, umfasst der erste Schlitten 22 eine Vielzahl an Bolzen 32, welche Vielzahl an Bolzen 32 mehrere unterschiedliche Befestigungspositionen für die für den ersten Schlitten 22 vorgesehenen Klemm- und Greifelemente 5a ausbildet. Auch umfasst der zweite Schlitten 24 eine Vielzahl an Bolzen 30, welche Vielzahl an Bolzen 30 mehrere unterschiedliche Befestigungspositionen für die für den zweiten Schlitten 24 vorgesehenen Klemm- und Greifelemente 5b ausbildet. Wie nachfolgend noch beschriebenen, können die Klemm- und Greifelemente 5a und 5b in unterschiedlichen Befestigungspositionen am jeweiligen Schlitten 22 bzw. 24 festgesetzt werden und hierzu selektiv in die jeweilige Befestigungsposition bzw. in den die jeweilige Befestigungsposition ausbildenden Bolzen 30 bzw. 32 eingehängt werden.

In Fig. 3 sind drei Paare mit jeweils zwei Klemm- und Greifelementen 5a und 5b vorgesehen, welche von dem ersten Schlitten 22 und dem zweiten Schlitten 24 getragen werden und von welchen ein jeweiliges Paar einen Artikel oder eine Reihe an Artikeln temporär und klemmend entgegennehmen kann. Sofern ein Verpackungsbetrieb umgestellt wird, kann es sein, dass sich über die Klemm- und Greifeinrichtung 1 nachfolgend entgegenzunehmende Artikel von bis dahin entgegenzunehmenden Artikeln in ihrer Geometrie unterscheiden. Die Klemm- und Greifeinrichtung 1 ist sodann mit der in Fig. 3 dargestellten Anordnung ihrer Klemm- und Greifelemente 5a und 5b nicht mehr dazu geeignet, diese für den nachfolgenden Verpackungsbetrieb vorgesehenen Artikel entsprechend entgegenzunehmen, da sich die Position und/oder Anzahl der Klemm- und Greifelemente 5a und 5b nicht für die nachfolgend entgegenzunehmenden Artikel mit ihrer entsprechenden Geometrie eignet. In der Praxis wird bis dato die gesamte Klemm- und Greifeinrichtung 1 hierfür am Manipulator 10 (vgl. Fig. 1) ausgetauscht. Da die gesamte Klemm- und Greifeinrichtung 1 eine große Masse besitzt, ist ein solcher Austausch umständlich. Mittels der Klemm- und Greifeinrichtung 1 kann, wie nachfolgend beschrieben, ein Ausrüsten bzw. Anpassen der Klemm- und Greifeinrichtung 1 unter Berücksichtigung einer bestimmten Anzahl und/oder Ausbildung entgegenzunehmender Artikel auf einfache Art und Weise sowie in kurzer Zeit erfolgen. Hierdurch kann zeitoptimiert und einfach eine jeweilige Anpassung der Klemm- und Greifeinrichtung 1 an unterschiedliche Verpackungsbetriebe bzw. unterschiedliche zu manipulierende Artikel erfolgen.

Die Fig. 4 zeigt weitere Aspekte der Klemm- und Greifeinrichtung 1 des Ausführungsbeispiels aus Fig. 3. In Fig. 4 ist nochmals der erste Schlitten 22 zu erkennen. Aus einer Zusammenschau der Figuren 3 und 4 wird hierbei deutlich, dass die für den ersten Schlitten 22 vorgesehenen Klemm- und Greifelemente 5a über das jeweilige Zwischenstück 23 in eine jeweilige Befestigungsposition ausbildende Bolzen 32 des ersten Schlittens 22 eingehängt werden. Auch wird durch eine Zusammenschau der Figuren 3 und 4 deutlich, dass die für den zweiten Schlitten 24 vorgesehenen Klemm- und Greifelemente 5b über das jeweilige zweite Zwischenstück 25 in eine jeweilige Befestigungsposition ausbildende Bolzen 30 des zweiten Schlittens 24 eingehängt werden. Die Zwischenstücke 23 und 27 sind jeweils als vom jeweiligen Schlitten 22 bzw. 24 und vom jeweiligen Klemm- und Greifelement 5a bzw. 5b vollständig trennbares eigenständiges Formteil ausgebildet.

Im Hinblick auf den konstruktiven Aufbau des ersten Schlittens 22 kann zudem festgehalten werden, dass der erste Schlitten 22 zwei parallel zueinander verlaufende Tragschienen 21 und 21' besitzt. An jeder der parallel zueinander verlaufenden Tragschienen 21 und 21' sind Befestigungspositionen ausbildende Bolzen 32 angeordnet. Um ein jeweiliges für den ersten Schlitten 22 vorgesehenes Klemm- und Greifelement 5a (vgl. Fig. 3) in einer jeweiligen Befestigungsposition anzuordnen, wird das Zwischenstück 23 sowohl in Bolzen 32 einer ersten der beiden Tragschienen 21 und 21' des ersten Schlittens 22 als auch in Bolzen 32 der weiteren der beiden Tragschienen 21 und 21' eingehängt. Somit wird das Zwischenstück 23 zusammen mit dem jeweiligen mit dem Zwischenstück 23 in Verbindung stehenden und für den ersten Schlitten 22 vorgesehenen Klemm- und Greifelement 5a gemeinsam über die beiden parallel zueinander orientierten Tragschienen 21 und 21' hängend gehalten.

Ein entsprechender konstruktiver Aufbau gilt für den zweiten Schlitten 24, wobei auf die beiden parallel zueinander orientierten Tragschienen des zweiten Schlittens 24 mit Ziffern 27 und 27' verwiesen wird.

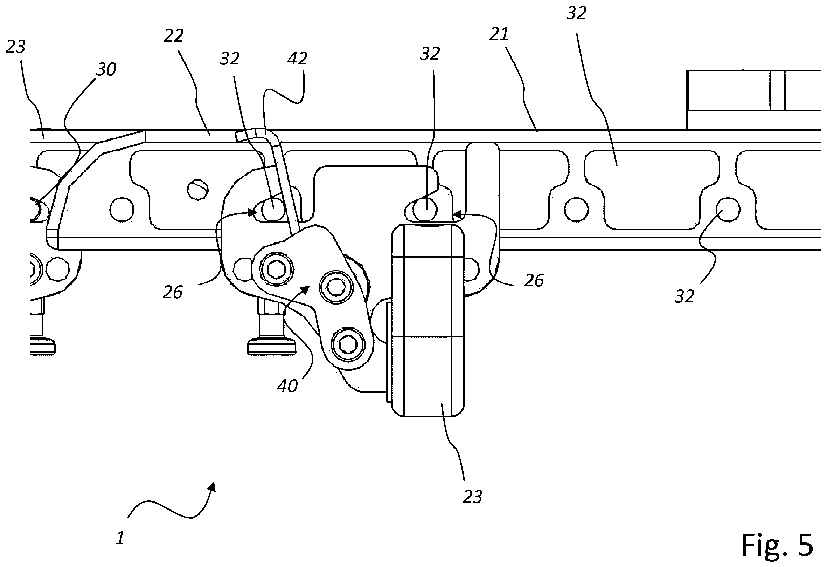

Die Figuren 5 bis 7 zeigen jeweils ein Zwischenstück 23 sowie einzelne Schritte des Abnehmens des Zwischenstücks 23 vom ersten Schlitten 22. Vorliegend wird das Abnehmen anhand des Zwischenstücks verdeutlicht, auf welches Ziffer 23 verweist. Entsprechende und vorliegend nicht ausformulierte Schritte sind für das Abnehmen des Zwischenstücks 25 vorgesehen, welches in Bolzen 30 des zweiten Schlittens 24 eingehängt werden kann und für den zweiten Schlitten 24 vorgesehene Klemm- und Greifelemente 5b trägt.

In Fig. 5 ist das Zwischenstück 23, an welchen ein für den ersten Schlitten 22 vorgesehenes Klemm- und Greifelement 5a angeordnet werden kann, in vier durch den ersten Schlitten 22 dargebotene Bolzen 32 eingehängt. In Fig. 5 sind zwei dieser vier Bolzen 32 zu erkennen, welche durch die unter Verweis mit Ziffer 21 dargestellte und als Bestandteil des ersten Schlittens 22 ausgebildete Tragschiene bereitgestellt werden. Eine weitere Tragschiene 21', welche in Fig. 4 bereits mit dargestellt wurde, stellt zwei weitere Bolzen 32 bereit, in welche das Zwischenstück 23 nach Fig. 5 ebenfalls eingehängt ist. Das Zwischenstück 23 besitzt hierzu einen symmetrischen Aufbau.

In der gezeigten Ausführungsform umfasst das Zwischenstück 23 einen Sicherungsmechanismus 40 mit einem Sicherungshebel 42. Der Sicherungshebel 42 ist mit Federkraft bzw. einer Rückstellkraft beaufschlagt und hält in der in Fig. 5 eingenommenen stabilen Lageposition den Bolzen 32 formschlüssig in der linksseitig dargestellten Nut 26. Zudem umfasst das Zwischenstück 23 eine rechtsseitig dargestellte weitere Nut 26, in welcher ein weiterer Bolzen 32 aufgenommen ist. Im vorliegenden Ausführungsbeispiel ist kein Sicherungsmechanismus 40 vorgesehen, um den Bolzen 32 in der rechtsseitig dargestellten Nut 26 formschlüssig zu halten. Vorstellbar sind jedoch auch Ausführungsformen, in welchen ein Zwischenstück 23 für jede Nut 26 einen eigenen Sicherungsmechanismus 40 sowie ggf. einen mit Rückstellkraft bzw. Federkraft beaufschlagten Sicherungshebel 42 umfasst.

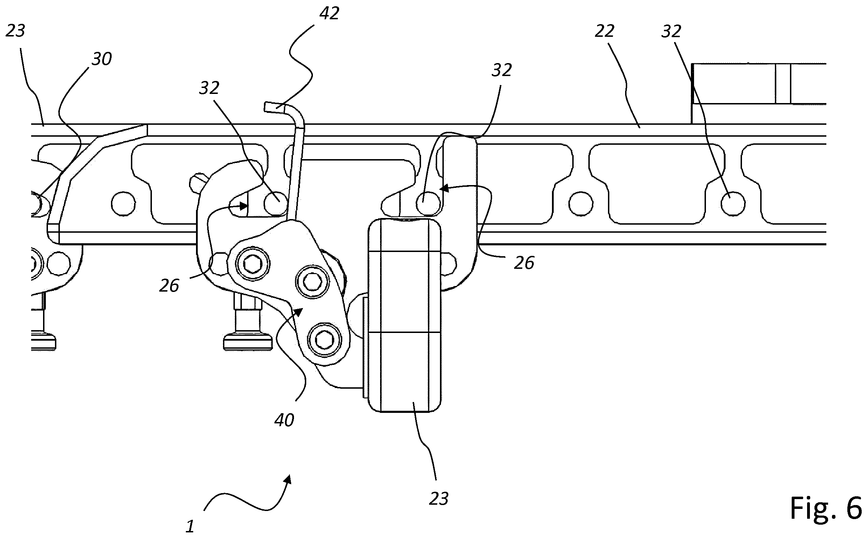

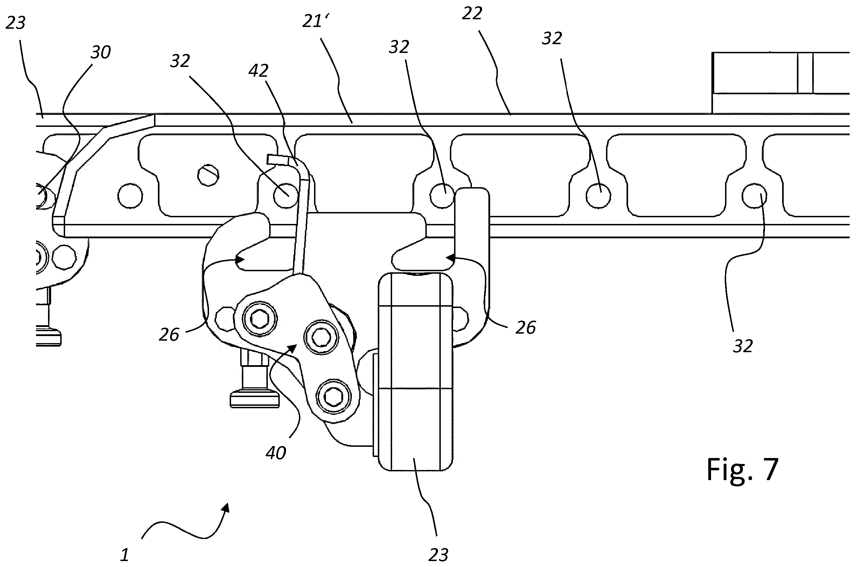

Um das Zwischenstück 23 von der Tragschiene 21 bzw. vom ersten Schlitten 22 abzunehmen, wird der Sicherungshebel 42 gegen die Rückstellkraft bzw. Federkraft aus der Position nach Fig. 5 in die Position nach Fig. 6 geschwenkt. Das Verschwenken des Sicherungshebels 42 aus der Position nach Fig. 5 in die Position nach Fig. 6 erfolgt um eine horizontal orientierte Achse und zeitlich nachdem eine das Zwischenstück 25 aufweisende Klemm- und Greifeinrichtung 1 in eine Serviceposition nach Fig. 1 bewegt wurde. Ein Bediener 9 hat bei in der Serviceposition befindlicher Klemm- und Greifeinrichtung 1 Zugriff auf den Sicherungshebel 42 und kann diesen unter Überwindung der Rückstellkraft bzw. Federkraft lösen bzw. in die Position nach Fig. 6 schwenken. In der Position nach Fig. 6 ist die Nut 26 nach außen hin offen und der Bolzen 32 mittels des Sicherungshebels 42 nicht mehr formschlüssig in der Nut 26 festgesetzt, so dass der in der linksseitig dargestellten Nut 26 in Fig. 5 noch aufgenommene Bolzen 32 zunächst einen Versatz nach Fig. 6 durchführt und sodann nach Fig. 7 in Richtung aus der Nut 26 geführt wird. in Fig. 7 haben die beiden Bolzen 32, welche in den beiden Nuten 26 des Zwischenstücks 23 ehemals aufgenommen waren, ihre Nuten 26 vollständig verlassen, so dass das Zwischenstück 23 von dem ersten Schlitten 22 bzw. der Tragschiene 21' abgenommen ist.

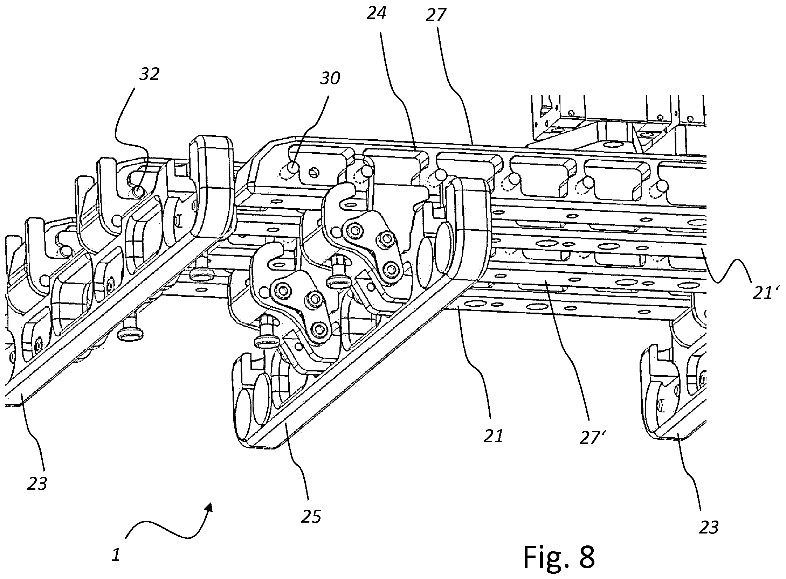

In Fig. 8 sind nochmals das Zwischenstück 23 dargestellt, welches zum Einhängen in Bolzen 30 des zweiten Schlittens 24 vorgesehen ist und das Zwischenstück 25, welches zum Einhängen in Bolzen 30 des ersten Schlittens 22 vorgesehen ist. Fig. 8 lässt hierbei erkennen, dass das Zwischenstück 23 sowohl in durch die erste Tragschiene 21 ausgebildete Bolzen 32 als auch durch die zweite Tragschiene 21' des ersten Schlittens 22 ausgebildete Bolzen 32 eingehängt ist. Ein Abnehmen des Zwischenstücks 23, bei welchem Abnehmen die jeweiligen Bolzen 32 aus der jeweiligen Nut 26 geführt werden, erfolgt entsprechend für die Bolzen 32 der ersten Tragschiene 21 und für die Bolzen 32 der zweiten Tragschiene 21' analog, ggf. zumindest näherungsweise zeitgleich und jeweils entsprechend den Schritten nach Figuren 5 bis 7.

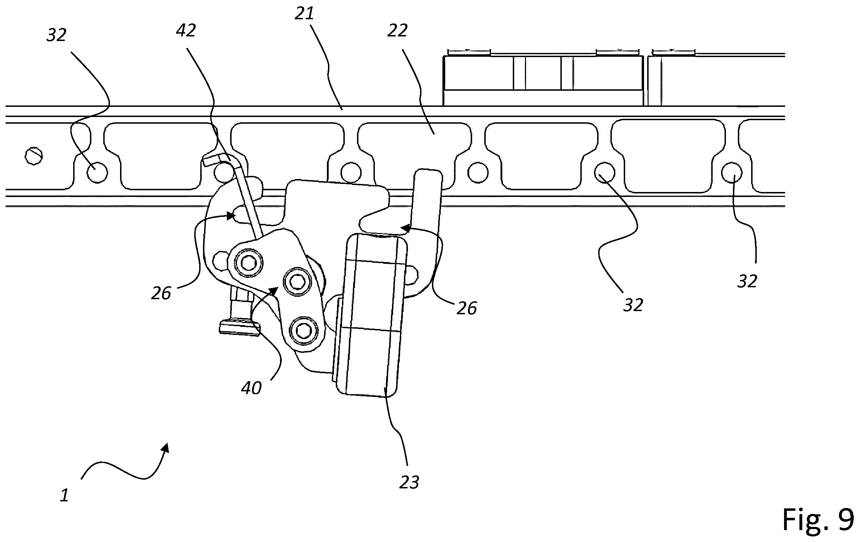

Die Figuren 9 bis 11 zeigen jeweils ein Zwischenstück 23 sowie einzelne Schrittes des Festsetzens an einer vorher ausgewählten Befestigungsposition. Ein erster Schritt wird hierbei in Fig. 9 verdeutlicht. So wird ein als Bestandteil des Sicherungsmechanismus 40 ausgebildeter Sicherungshebel 42 des Zwischenstücks 23 mit einem Bolzen 32 in Anlage gebracht, welcher Bolzen 32 zum Anbringen des Zwischenstücks 23 für eine ausgewählte Befestigungsposition vorgesehen ist. Eine weitere Tragschiene 21' (vgl. Fig. 8), die in Fig. 9 nicht zu erkennen ist und parallel zur Tragschiene 21 verläuft, bildet einen weiteren Bolzen 32 aus, welcher mit dem Bolzen 32 fluchtet, der mit dem Sicherungshebel 42 in Anlage steht. Auch mit dem weiteren Bolzen 32 steht ein als Bestandteil des Zwischenstücks 23 ausgebildeter Sicherungshebel 42 bei der Position nach Fig. 9 bereits in Anlage.

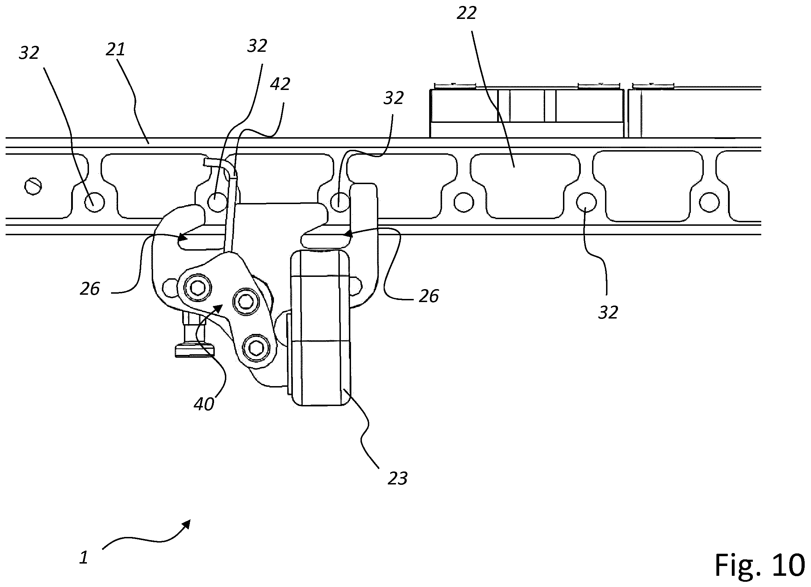

Eine Zusammenschau der Figuren 9 und 10 lässt zudem erkennen, dass über den Bolzen 32, welcher mit dem Sicherungshebel 42 weiterhin in Anlage steht, der Sicherungshebel 42 geschwenkt wurde. Der Sicherungshebel 42 steht mit einer in Fig. 10 nicht mit dargestellten Feder in Verbindung. Vorliegend wurde der Sicherungshebel 42 gegen die Kraft dieser Feder bzw. gegen eine durch die Feder ausgebildete Rückstellkraft geschwenkt. In Fig. 10 hat der Sicherungsarm 42 eine Endposition erreicht. Hierbei ist die linksseitig dargestellte Nut 26 nicht mehr durch den Sicherungshebel 42 blockiert, so dass der Bolzen 32 in die linksseitig dargestellte Nut 26 geführt werden kann. Auch in die rechtsseitig dargestellte Nut 26 des Zwischenstücks 23 beginnt ein weiterer Bolzen 32 einzutauchen.

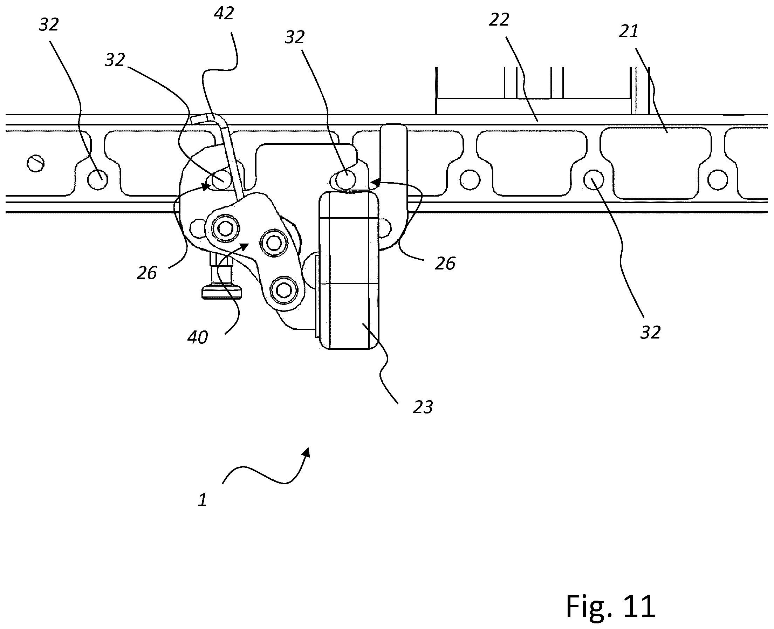

Eine Zusammenschau der Figuren 10 und 11 verdeutlicht, dass der jeweilige Bolzen 32 nach Eintritt in die jeweilige Nut eine Richtungsumkehr erfährt. Der Sicherungshebel 42 schwenkt aufgrund der durch die Feder des Sicherungsmechanismus 40 bewirkten Rückstellkraft in die Position nach Fig. 9 zurück. Der Bolzen 32 ist sodann gemäß Fig. 11 formschlüssig in der Nut 26 aufgenommen. Ein ungewollter Austritt des Bolzens 32 aus der Nut 26 wird über den Sicherungshebel 42 unterbunden.

Folgendes sei als ergänzender Hinweis zu den vorstehenden Ausführungen gegeben: Wenn auch im Zusammenhang der Figuren und deren vorstehenden Beschreibungen generell von "schematischen" Darstellungen und Ansichten die Rede ist, so ist damit keineswegs gemeint, dass die Figurendarstellungen und deren Beschreibung hinsichtlich der Offenbarung der Erfindung von untergeordneter Bedeutung sein sollen. Der Fachmann ist durchaus in der Lage, aus den schematisch und abstrakt gezeichneten Darstellungen genug an Informationen zu entnehmen, die ihm das Verständnis der Erfindung erleichtern, ohne dass er etwa aus den gezeichneten und möglicherweise nicht exakt maßstabsgerechten Größenverhältnissen von Teilen der Klemm- und Greifeinrichtung (1) und/oder des Manipulators oder anderer gezeichneter Elemente in irgendeiner Weise in seinem Verständnis beeinträchtigt wäre. Die Figuren ermöglichen es dem Fachmann als Leser vielmehr, anhand der konkreter erläuterten Umsetzungen des erfindungsgemäßen Verfahrens und des konkreter erläuterten Aufbaus der erfindungsgemäßen Klemm- und Greifeinrichtung (1) für einen Manipulator ein besseres Verständnis für den in den Ansprüchen sowie im allgemeinen Teil der Beschreibung allgemeiner und/oder abstrakter formulierten Erfindungsgedanken abzuleiten.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

1 Klemm- und Greifeinrichtung
2 Basis
5a Klemm- und Greifelement
5b Klemm- und Greifelement
10 Manipulator
12 Deltakinematik-Roboter
15 Horizontalfördereinrichtung
21 Tragschiene (erster Schlitten)
22 Schlitten
23 Zwischenstück
24 Schlitten
25 Zwischenstück
26 Nut
27 Tragschiene (zweiter Schlitten)
30 Bolzen
32 Bolzen
40 Sicherungsmechanismus
42 Sicherungshebel
60 Untere Aufhängung
62 Tool Center Point

## Patentansprüche

1. System (50) zum Handhaben von Artikeln, umfassend
- mindestens eine Horizontalfördereinrichtung (15), entlang welcher die zu manipulierenden Artikel bewegbar sind,
- wenigstens einen Manipulator (10) sowie
- mindestens eine Klemm- und Greifeinrichtung (1) zum Entgegennehmen von Artikeln, welche von dem wenigstens einen Manipulator (10) getragen wird, wobei der wenigstens eine Manipulator (10) derart ansteuerbar ist, dass der wenigstens eine Manipulator (10) mittels der mindestens einen Klemm- und Greifeinrichtung (1) mehrere via die mindestens eine Horizontalfördereinrichtung (15) bewegte Artikel in eine relative Ausrichtung zueinander überführen kann, welche insbesondere auf eine aus diesen mehreren Artikeln zu bildende palettierfähige Lage oder eine aus diesen mehreren Artikeln durch Drehen und/oder Verschieben zu bildende bestimmte Gruppierung und/oder durch Drehen und/oder Verschieben zu bildende bestimmte Verteilung abgestimmt ist,
und bei welchem System (50)
- die Klemm- und Greifeinrichtung (1) mindestens zwei jeweils hängend angeordnete Klemm- und Greifelemente (5a, 5b), welche zum temporären Entgegennehmen eines Artikels oder mehrerer Artikel zusammenwirken, umfasst, wobei die Klemm- und Greifeinrichtung (1) mehrere verschiedene Befestigungspositionen für die mindestens zwei Klemm- und Greifelemente (5a, 5b) bereitstellt, **dadurch gekennzeichnet, dass**
an den mehreren verschiedenen Befestigungspositionen die mindestens zwei Klemm- und Greifelemente (5a, 5b) abgestimmt auf eine jeweilige Anzahl und/oder Ausbildung entgegenzunehmender Artikel selektiv und abnehmbar festgesetzt werden können, wobei
die mindestens zwei Klemm- und Greifelemente (5a, 5b) werkzeuglos an den mehreren verschiedenen Befestigungspositionen festsetzbar sind und/oder werkzeuglos von ihrer jeweiligen Befestigungsposition abnehmbar sind.

2. System (50) nach Anspruch 1, umfassend
- eine an den wenigstens einen Manipulator gekoppelte Steuerungseinheit sowie
- mindestens eine Sensorik, wobei
die mindestens eine Sensorik zur Überprüfung einer ordnungsgemäßen Festsetzung der mindestens zwei Klemm- und Greifelemente (5a, 5b) an ihrer jeweiligen Befestigungsposition mit der Steuerungseinheit in Verbindung steht und wobei die Steuerungseinheit bei einer im Rahmen der Überprüfung festgestellten nicht ordnungsgemäßen Festsetzung wenigstens eines Klemm- und
Greifelementes (5a, 5b) eine Ansteuerung des wenigstens einen Manipulators (10) unterbinden und/oder einen für einen Bediener (9) erkennbaren Hinweis zur nicht ordnungsgemäß erfolgten Festsetzung des wenigstens einen Klemm- und Greifelementes (5a, 5b) ausgeben kann.

3. System (50) nach Anspruch 1 oder Anspruch 2, bei dem die mindestens zwei Klemm- und Greifelemente (5a, 5b) zur gemeinsamen Entgegennahme von Artikeln ausgebildet sind, welche Artikel durch Getränkebehältnisse und insbesondere durch PET-Flaschen ausgebildet sind.

4. System nach einem der Ansprüche 1 bis 3, bei welchem die mindestens zwei Klemm- und Greifelemente (5a, 5b) an ihrer jeweiligen Befestigungsposition werkzeuglos eingehängt werden können und/oder bei welcher die mindestens zwei Klemm- und Greifelemente (5a, 5b) aus ihrer jeweiligen Befestigungsposition werkzeuglos ausgehängt werden können.

5. System nach Anspruch 4, umfassend für die mindestens zwei Klemm- und Greifelemente (5a, 5b) jeweils ein separates und vollständig vom jeweiligen Klemm- und Greifelement (5a, 5b) mechanisch trennbares Zwischenstück (23, 25), über welches jeweilige Zwischenstück (23, 25) die mindestens zwei Klemm- und Greifelemente (5a, 5b) an ihrer jeweiligen Befestigungsposition werkzeuglos eingehängt werden können und/oder mit welchem jeweiligen Zwischenstück (23, 25) die mindestens zwei Klemm- und-Greifelemente (5a, 5b) aus ihrer jeweiligen Befestigungsposition werkzeuglos ausgehängt werden können.

6. System nach einem der Ansprüche 1 bis 5, bei welchem
- jede der Befestigungspositionen einen Bolzen (30, 32) oder Stift ausbildet, und bei welchem
- die mindestens zwei Klemm- und Greifelemente (5a, 5b) oder die Zwischenstücke (23, 25) jeweils eine gegenüber den Bolzen (30, 32) bzw. Stiften der Befestigungspositionen korrespondierende Nut (26) umfassen, in welcher jeweiligen Nut (26) der Bolzen (30, 32) oder Stift einer jeweiligen Befestigungsposition zum Festsetzen des jeweiligen Klemm- und Greifelementes (5a, 5b) aufgenommen werden kann.

7. System nach Anspruch 6, bei welchem die mindestens zwei Klemm- und Greifelemente (5a, 5b) oder die Zwischenstücke (23, 25) jeweils einen Sicherungsmechanismus (40) umfassen, über welchen ein in einer jeweiligen Nut (26) aufgenommener Bolzen (30, 32) bzw. Stift formschlüssig in der Nut (26) gehalten werden kann.

8. System nach Anspruch 7, bei welchem
a) der jeweilige Sicherungsmechanismus (40) einen federkraftbeaufschlagten Sicherungshebel (42) besitzt, welcher unter Zuhilfenahme seiner Federkraft den in der jeweiligen Nut (26) aufgenommenen Bolzen (30, 32) bzw. Stift formschlüssig in der Nut (26) hält, und/oder bei welchem
b) der jeweilige Sicherungsmechanismus (40) einen federkraftbeaufschlagten Sicherungshebel (42) besitzt, der zur Abnahme seines jeweiligen Klemm- und Greifelementes (5a, 5b) aus der Befestigungsposition unter Überwindung der Federkraft und Freigabe der Nut (26) geschwenkt werden kann.

9. System nach einem der Ansprüche 1 bis 8, bei welchem die Klemm- und Greifeinrichtung (1) einen ersten Schlitten (22) mit mehreren Befestigungspositionen für mindestens ein erstes Klemm- und Greifelement (5a) sowie einen zweiten Schlitten (24) mit mehreren weiteren Befestigungspositionen für mindestens ein zweites Klemm- und Greifelement (5b) umfasst, wobei der erste Schlitten (22) und der zweite Schlitten (24) zum gemeinsamen temporären Entgegennehmen eines Artikels oder mehrerer Artikel über das am ersten Schlitten (22) und am zweiten Schlitten (24) in einer jeweiligen Befestigungsposition festgesetzte mindestens eine erste Klemm- und Greifelement (5a) und mindestens eine zweite Klemm- und Greifelement (5b) in vorzugsweise horizontaler Richtung relativ zueinander bewegbar sind.

10. System nach einem der Ansprüche 1 bis 9, bei dem der wenigstens eine Manipulator (10) durch wenigstens einen Deltakinematik-Roboter (12) ausgebildet ist.

11. Verfahren zum Ausrüsten einer für einen Manipulator (10) vorgesehenen Klemm- und Greifeinrichtung (1) mit mindestens zwei zur gemeinsamen Entgegennahme von Artikeln vorgesehenen Klemm- und Greifelementen (5a, 5b) bei einem System (50) nach einem der Ansprüche 1 bis 9, umfassend folgende Schritte:
- Auswählen wenigstens zweier durch die Klemm- und Greifeinrichtung (1) bereitgestellter Befestigungspositionen für die mindestens zwei zur gemeinsamen Entgegennahme von Artikeln ausgebildeten Klemm- und Greifelemente (5a, 5b) und
- Festsetzen der mindestens zwei zur gemeinsamen Entgegennahme von Artikeln ausgebildeten Klemm- und Greifelemente (5a, 5b) an den wenigstens zwei ausgewählten Befestigungspositionen, **dadurch gekennzeichnet, dass**
- die wenigstens zwei Befestigungspositionen jeweils aus mehreren möglichen Befestigungspositionen und unter Berücksichtigung einer Anzahl und/oder Ausbildung über die mindestens zwei Klemm- und Greifelemente (5a, 5b) gemeinsam entgegenzunehmenden Artikeln ausgewählt werden und die mindestens zwei Klemm- und Greifelemente (5a, 5b) hierauf folgend an den wenigstens zwei ausgewählten Befestigungspositionen abnehmbar festgesetzt werden und wobei
- die mindestens zwei zur Entgegennahme von Artikeln ausgebildeten Klemm- und Greifelemente (5a, 5b) an den wenigstens zwei ausgewählten Befestigungspositionen werkzeuglos festgesetzt werden, und/oder bei welchem
- zeitlich vor dem Festsetzen der mindestens zwei zur gemeinsamen Entgegennahme von Artikeln ausgebildeten Klemm- und-Greifelementen (5a, 5b) ein bereits an einer Befestigungsposition befindliches Klemm- und Greifelement (5a, 5b) oder mehrere bereits an einer jeweiligen Befestigungsposition befindliche Klemm- und Greifelemente (5a, 5b) werkzeuglos von ihrer jeweiligen Befestigungsposition abgenommen werden.

12. Verfahren nach Anspruch 11, bei welchem
a) die mindestens zwei zur Entgegennahme von Artikeln ausgebildeten Klemm- und Greifelemente (5a, 5b) an den wenigstens zwei ausgewählten Befestigungspositionen eingehängt und hierdurch werkzeuglos an den wenigstens zwei Befestigungspositionen festgesetzt werden, und/oder bei welchem
b) zeitlich vor dem Festsetzen der mindestens zwei zur gemeinsamen Entgegennahme von Artikeln ausgebildeten Klemm- und Greifelemente (5a, 5b) ein bereits an einer Befestigungsposition befindliches Klemm- und Greifelement (5a, 5b) oder mehrere bereits an einer jeweiligen Befestigungsposition befindliche Klemm- und Greifelemente (5a, 5b) ausgehängt und hierdurch werkzeuglos von ihrer jeweiligen Befestigungsposition abgenommen werden.

13. Verfahren nach Anspruch 12, bei welchem
a) die mindestens zwei zur Entgegennahme von Artikeln ausgebildeten Klemm- und Greifelemente (5a, 5b) an den wenigstens zwei ausgewählten Befestigungspositionen über ein jeweiliges separates und vollständig vom jeweiligen Klemm- und Greifelement (5a, 5b) mechanisch trennbares Zwischenstück (23, 25) eingehängt werden und hierdurch werkzeuglos an den wenigstens zwei Befestigungspositionen festgesetzt werden, und/oder bei welchem
b) zeitlich vor dem Festsetzen der mindestens zwei zur gemeinsamen Entgegennahme von Artikeln ausgebildeten Klemm- und Greifelemente (5a, 5b) ein bereits an einer Befestigungsposition befindliches Klemm- und Greifelement (5a, 5b) oder mehrere bereits an einer jeweiligen Befestigungsposition befindliche Klemm- und Greifelemente (5a, 5b) und ein jeweiliges separates, vollständig vom jeweiligen Klemm- und Greifelement (5a, 5b) trennbares und das jeweilige Klemm- und Greifelement (5a, 5b) tragendes Zwischenstück (23, 25) ausgehängt werden, wobei das jeweilige Klemm- und Greifelement (5a, 5b) sowie das jeweilige Zwischenstück (23, 25) werkzeuglos von ihrer jeweiligen Befestigungsposition abgenommen werden.

14. Verfahren nach Anspruch 13, bei welchem die mindestens zwei zur Entgegennahme von Artikeln ausgebildeten Klemm- und Greifelemente (5a, 5b) und/oder das jeweilige separate und vollständig vom jeweiligen Klemm- und Greifelement (5a, 5b) mechanisch trennbare Zwischenstück (23, 25) jeweils über einen manuell lösbaren Sicherungsmechanismus (40) verfügen, und bei welchem
a) im Bereich einer jeweiligen ausgewählten Befestigungsposition ein Bolzen (30, 32) oder Stift angeordnet ist, in welchen das jeweilige Klemm- und Greifelement (5a, 5b) selbst oder mittels des jeweiligen Zwischenstücks (23, 25) über eine als Bestandteil des jeweiligen Klemm- und Greifelementes (5a, 5b) oder des Zwischenstücks (23, 25) ausgebildete Nut (26) eingehängt wird, worauf folgend der manuell lösbare Sicherungsmechanismus (40) den jeweiligen Bolzen (30, 32) oder Stift formschlüssig in der Nut (26) hält und hierdurch das jeweilige Klemm- und Greifelement (5a, 5b) formschlüssig an der jeweiligen ausgewählten Befestigungsposition festsetzt, und/oder bei welchem
b) zeitlich vor dem Festsetzen der mindestens zwei zur gemeinsamen Entgegennahme von Artikeln ausgebildeten Klemm- und Greifelemente (5a, 5b) ein bereits an einer Befestigungsposition befindliches Klemm- und Greifelement (5a, 5b) oder mehrere bereits an einer jeweiligen Befestigungsposition befindliche Klemm- und Greifelemente selbst oder über ein jeweiliges Zwischenstück (23, 25) ausgehängt werden, wozu der das jeweilige Klemm- und Greifelement (5a, 5b) in der jeweiligen Befestigungsposition formschlüssig haltende Sicherungsmechanismus (40) gelöst wird und zeitlich hierauf folgend ein in der jeweiligen Befestigungsposition befindlicher Bolzen (30, 32) oder Stift aus einer als Bestandteil des jeweiligen Klemm- und Greifelementes (5a, 5b) oder des jeweiligen Zwischenstücks (23, 25) ausgebildeten Nut (26) bewegt wird.

15. Verfahren nach Anspruch 14, bei welchem die Sicherungsmechanismen (40) jeweils über wenigstens einen durch Federkraft beaufschlagten Sicherungshebel (42) verfügen, wobei
a) der jeweilige wenigstens eine durch Federkraft beaufschlagte Sicherungshebel (42) den jeweiligen Bolzen (30, 32) oder Stift formschlüssig in der Nut (26) hält und hierdurch das jeweilige Klemm- und Greifelement (5a, 5b) formschlüssig in der jeweiligen ausgewählten Befestigungsposition festsetzt, und/oder bei welchem
b) zeitlich vor dem Festsetzen der mindestens zwei zur gemeinsamen Entgegennahme von Artikeln ausgebildeten Klemm- und Greifelemente (5a, 5b) ein bereits an einer Befestigungsposition befindliches Klemm- und Greifelement (5a, 5b) oder mehrere bereits an einer jeweiligen Befestigungsposition befindliche Klemm- und Greifelemente (5a, 5b) ausgehängt werden, wozu zeitlich vorausgehend der jeweilige wenigstens eine durch Federkraft beaufschlagte Sicherungshebel (42) der mehreren bereits an einer jeweiligen Befestigungsposition befindlichen Klemm- und Greifelemente (5a, 5b) oder des jeweiligen Zwischenstücks (23, 25) unter Überwindung einer jeweilige Federkraft geschwenkt wird und woraus resultierend die Nut (26) des jeweiligen Klemm- und Greifelementes (5a, 5b) oder des jeweiligen Zwischenstücks (23, 25) für die Bewegung des jeweiligen Bolzens (30, 32) oder Stiftes aus der jeweiligen Nut (26) freigegeben wird.

16. Verfahren nach einem der Ansprüche 11 bis 15, bei welchem die Klemm- und Greifeinrichtung (1) zum Festsetzen der mindestens zwei zur gemeinsamen Entgegennahme von Artikeln ausgebildeten Klemm- und Greifelemente (5a, 5b) an den wenigstens zwei ausgewählten Befestigungspositionen in einen Servicebereich bewegt wird, in welchem Servicebereich sich die Klemm- und Greifeinrichtung (1) im Zugriffsbereich einer Person oder eines Bedieners befindet, wodurch
a) die Klemm- und Greifeinrichtung (1) für einen Benutzer (9) zum manuellen Festsetzen der mindestens zwei zur gemeinsamen Entgegennahme von Artikeln ausgebildeten Klemm- und Greifelemente (5a, 5b) in den ausgewählten Befestigungspositionen zugänglich gemacht wird, und/oder wodurch
b) die Klemm- und Greifeinrichtung (1) zur vorzugsweise werkzeuglosen Abnahme eines bereits an einer Befestigungsposition befindlichen Klemm- und Greifelement (5a, 5b) oder mehrerer bereits an einer jeweiligen Befestigungsposition befindlicher Klemm- und Greifelemente (5a, 5b) zugänglich gemacht wird.

17. Verfahren nach einem der Ansprüche 11 bis 16, bei welcher eine für ein erstes Klemm- und Greifelement (5a) ausgewählte Befestigungsposition durch einen ersten Schlitten (22) bereitgestellt wird und bei welchem eine für ein zweites Klemm- und Greifelement (5b) ausgewählte Befestigungsposition durch einen zweiten Schlitten (24) bereitgestellt wird und das erste Klemm- und Greifelement (5a) sowie das zweite Klemm- und Greifelement (5b) an der über den ersten Schlitten und den zweiten Schlitten (22, 24) bereitgestellten ersten und zweiten Befestigungsposition festgesetzt werden, worauf folgend der erste Schlitten (22) gemeinsam mit dem am ersten Schlitten (22) festgesetzten Klemm- und Greifelement (5a) und der zweite Schlitten (24) mit dem am zweiten Schlitten (24) festgesetzten zweiten Klemm- und Greifelement (5b) vorzugsweise in horizontaler Richtung relativ zueinander bewegt werden und wobei hierbei das erste Klemm- und-Greifelement (5a) und das zweite Klemm- und Greifelement (5b) gemeinsam einen Artikel oder mehrere Artikel klemmend entgegennehmen.

18. Verfahren nach einem der Ansprüche 11 bis 17, bei welchem sensorisch überprüft wird, ob die mindestens zwei Klemm- und Greifelemente (5a, 5b) ordnungsgemäß an ihrer jeweiligen Befestigungsposition abnehmbar festgesetzt wurden und wobei bei einer im Rahmen der Überprüfung festgestellten nicht ordnungsgemäßen Festsetzung wenigstens eines der mindestens zwei Klemm- und Greifelemente (5a, 5b) an seiner jeweiligen Befestigungsposition ein Hinweise für einen Bediener (9) ausgegeben wird und/oder eine für die Klemm- und Greifeinrichtung (1) vorgesehene Manipulation von Artikeln unterbunden wird.

19. Verfahren nach den Ansprüchen 16 und 18, bei welchem die Klemm- und Greifeinrichtung (1) zur sensorischen Überprüfung aus dem Servicebereich in einen Erfassungsbereich einer durch eine Kamera und/oder einen Zeilensensor ausgebildeten Sensorik bewegt bzw. verfahren wird.

## Claims

1. A system (50) for handling articles, comprising
- at least one horizontal conveyor device (15) along which the articles to be manipulated are movable,
- at least one manipulator (10), and
- at least one clamping and gripping device (1) for receiving articles, which clamping and gripping device is carried by the at least one manipulator (10), wherein
the at least one manipulator (10) is controllable in such a manner that the at least one manipulator (10) can, by means of the at least one clamping and gripping device (1), transfer a plurality of articles being moved via the at least one horizontal conveyor device (15) into a relative alignment relative to one another, which alignment is adapted, in particular, to a palletisable layer to be formed from this plurality of articles or to a specific grouping to be formed from this plurality of articles, by the articles being rotated and/or shifted, and/or to a specific distribution to be formed by the articles being rotated and/or shifted,
and in which system (50)
- the clamping and gripping device (1) comprises at least two clamping and gripping elements (5a, 5b), each arranged in a suspended manner, which interact to temporarily receive one or more articles, wherein the clamping and gripping device (1) provides a plurality of different fastening positions for the at least two clamping and gripping elements (5a, 5b), **characterised in that**
the at least two clamping and gripping elements (5a, 5b) can be selectively and removably fixed at the plurality of different fastening positions in accordance with a particular number and/or formation of articles to be received, wherein
the at least two clamping and gripping elements (5a, 5b) are fixable without tools at the plurality of different fastening positions and/or are removable without tools each from their particular fastening position.

2. The system (50) according to claim 1, comprising
- a control unit coupled to the at least one manipulator and
- at least one sensor system, wherein
the at least one sensor system is connected to the control unit for verification of a proper fixation of the at least two clamping and gripping elements (5a, 5b) each at their particular fastening position, and wherein, in the case of an improper fixation of at least one clamping and gripping element (5a, 5b) being determined during the verification, the control unit can prevent actuation of the at least one manipulator (10) and/or can output information identifiable by an operator (9) that the fixation of the at least one clamping and gripping element (5a, 5b) has not been properly carried out.

3. The system (50) according to claim 1 or claim 2, in which the at least two clamping and gripping elements (5a, 5b) are designed to jointly receive articles, which articles are formed by beverage containers and, in particular, by PET bottles.

4. The system according to one of the claims 1 to 3, in which the at least two clamping and gripping elements (5a, 5b) can be hinged without tools each to their particular fastening position, and/or in which the at least two clamping and gripping elements (5a, 5b) can be unhinged without tools each from their particular fastening position.

5. The system (50) according to claim 4, comprising a separate intermediate piece (23, 25) for each of the at least two clamping and gripping elements (5a, 5b), which intermediate piece (23, 25) is mechanically completely separable from the particular clamping and gripping element (5a, 5b), and via which particular intermediate piece (23, 25) the at least two clamping and gripping elements (5a, 5b) can be hinged without tools each to their particular fastening position, and/or with which particular intermediate piece (23, 25) the at least two clamping and gripping elements (5a, 5b) can be unhinged without tools each from their particular fastening position.

6. The system according to one of the claims 1 to 5, in which
- each of the fastening positions forms a bolt (30, 32) or pin, and in which
- the at least two clamping and gripping elements (5a, 5b) or the intermediate pieces (23, 25) each comprise a groove (26) corresponding to the bolts (30, 32) or pins of the fastening positions, in which particular groove (26) the bolt (30, 32) or pin of a particular fastening position can be received in order to fix the particular clamping and gripping element (5a, 5b).

7. The system according to claim 6, in which the at least two clamping and-gripping elements (5a, 5b) or the intermediate pieces (23, 25) each comprise a securing mechanism (40), via which a bolt (30, 32) or pin received in a particular groove (26) can be held in a form-locking manner in the groove (26).

8. The system according to claim 7, in which
a) the particular securing mechanism (40) has a spring-loaded securing lever (42) which holds the bolt (30, 32) or pin received in the particular groove (26) in a form-locking manner in the groove (26) with the help of its spring force, and/or in which
b) the particular securing mechanism (40) has a spring-loaded securing lever (42) which, for the purpose of removal of its particular clamping and gripping element (5a, 5b), can be pivoted out of the fastening position, thereby overcoming the spring force and unblocking the groove (26).

9. The system according to one of the claims 1 to 8, in which the clamping and-gripping device (1) comprises a first carriage (22) with a plurality of fastening positions for at least one first clamping and gripping element (5a) and a second carriage (24) with a plurality of further fastening positions for at least one second clamping and gripping element (5b), wherein the first carriage (22) and the second carriage (24) are movable relative to each other, preferably in a horizontal direction, in order to temporarily jointly receive one article or a plurality of articles via the at least one first clamping and gripping element (5a) and the at least one second clamping and gripping element (5b) fixed at the first carriage (22) and at the second carriage (24) each in a particular fastening position.

10. The system according to one of the claims 1 to 9, in which the at least one manipulator (10) is formed by at least one delta kinematic robot (12).

11. A method for equipping a clamping and gripping device (1) provided for a manipulator (10), with at least two clamping and gripping elements (5a, 5b) provided to jointly receive articles in a system (50) according to one of the claims 1 to 9, the method comprising the following steps:
- selecting at least two fastening positions, which are provided by the clamping and gripping device (1), for the at least two clamping and gripping elements (5a, 5b) designed to jointly receive articles, and
- fixing the at least two clamping and gripping elements (5a, 5b), which are designed to jointly receive articles, at the at least two selected fastening positions,
**characterised in that**
- the at least two fastening positions are each selected from a plurality of possible fastening positions and taking into account a number and/or formation of articles to be received jointly via the at least two clamping and gripping elements (5a, 5b), and **in that** the at least two clamping and gripping elements (5a, 5b) are subsequently removably fixed at the at least two selected fastening positions, and
wherein
- the at least two clamping and gripping elements (5a, 5b) designed to receive articles are fixed without tools at the at least two selected fastening positions, and/or in which method
- a clamping and gripping element (5a, 5b) already located at a fastening position or a plurality of clamping and gripping elements (5a, 5b) already located each at a particular fastening position is/are removed without tools from its/their particular fastening position temporally before the fixation of the at least two clamping and gripping elements (5a, 5b) designed to jointly receive articles.

12. The method according to claim 11, in which
a) the at least two clamping and gripping elements (5a, 5b) designed to receive articles are hinged and hereby fixed without tools at the at least two selected fastening positions, and/or in which
b) a clamping and gripping element (5a, 5b) already located at a fastening position or a plurality of clamping and gripping elements (5a, 5b) already located each at a particular fastening position is/are unhinged and hereby removed without tools each from its/their particular fastening position temporally before the fixation of the at least two clamping and gripping elements (5a, 5b) designed to jointly receive articles.

13. The method according to claim 12, in which
a) the at least two clamping and gripping elements (5a, 5b) designed to receive articles are hinged to the at least two selected fastening positions each via a particular separate intermediate piece (23, 25), which is mechanically completely separable from the particular clamping and gripping element (5a, 5b), and are hereby fixed without tools at the at least two selected fastening positions, and/or in which
b) a clamping and gripping element (5a, 5b) already located at a fastening position or a plurality of clamping and gripping elements (5a, 5b) already located each at a particular fastening position and a particular separate intermediate piece (23, 25), which is completely separable from the particular clamping and gripping element (5a, 5b) and which carries the particular clamping and gripping element (5a, 5b), are unhinged temporally before the fixation of the at least two clamping and gripping elements (5a, 5b) designed to jointly receive articles, wherein the particular clamping and gripping element (5a, 5b) and the particular intermediate piece (23, 25) are removed without tools each from their particular fastening position.

14. The method according to claim 13, in which the at least two clamping and gripping elements (5a, 5b) designed to receive articles and/or the particular separate intermediate piece (23, 25), which can be mechanically completely separable from the particular clamping and gripping element (5a, 5b), each have a manually releasable securing mechanism (40), and in which
a) a bolt (30, 32) or pin is arranged in the area of a particular selected fastening position, to which bolt (30, 32) or pin the particular clamping and gripping element (5a, 5b) is either itself or by means of the particular intermediate piece (23, 25) hinged via a groove (26) formed as a component of the particular clamping and gripping element (5a, 5b) or of the intermediate piece (23, 25), whereupon the manually releasable securing mechanism (40) holds the particular bolt (30, 32) or pin in a form-locking manner in the groove (26) and hereby fixes the particular clamping and gripping element (5a, 5b) in a form-locking manner at the particular selected fastening position, and/or in which
b) a clamping and gripping element (5a, 5b) already located at a fastening position or a plurality of clamping and gripping elements (5a, 5b) already located each at a particular fastening position is/are either itself/themselves or by means of a particular intermediate piece (23, 25) unhinged temporally before the fixation of the at least two clamping and gripping elements (5a, 5b) designed to jointly receive articles, for which purpose the securing mechanism (40) holding the particular clamping and gripping element (5a, 5b) in a form-locking manner at the particular fastening position is released and a bolt (30, 32) or pin located at the particular fastening position is temporally subsequently moved out of a groove (26) formed as a component of the particular clamping and gripping element (5a, 5b) or of the particular intermediate piece (23, 25).

15. The method according to claim 14, in which the securing mechanisms (40) each have at least one spring-loaded securing lever (42), wherein
a) the particular at least one spring-loaded securing lever (42) holds the particular bolt (30, 32) or pin in a form-locking manner in the groove (26) and hereby fixes the particular clamping and gripping element (5a, 5b) in a form-locking manner at the particular selected fastening position, and/or in which
b) a clamping and gripping element (5a, 5b) already located at a fastening position or a plurality of clamping and gripping elements (5a, 5b) already located each at a particular fastening position is/are unhinged temporally before the fixation of the at least two clamping and gripping elements (5a, 5b) designed to jointly receive articles, for which purpose and temporally preceding hereto, the particular at least one spring-loaded securing lever (42) of the plurality of clamping and gripping elements (5a, 5b) or of the particular intermediate piece (23, 25) already located each at a particular fastening position is pivoted, thereby overcoming a particular spring force, and, as a result, the groove (26) of the particular clamping and gripping element (5a, 5b) or the particular intermediate piece (23, 25) is unblocked for the particular bolt (30, 32) or pin to be moved out of the particular groove (26).

16. The method according to one of the claims 11 to 15, in which the clamping and gripping device (1) is moved into a service area for the purpose of the fixation of the at least two clamping and gripping elements (5a, 5b), which are designed to jointly receive articles, at the at least two selected fastening positions, in which service area the clamping and gripping device (1) is located within the access range of a person or of an operator, whereby
a) the clamping and gripping device (1) is made accessible to a user (9) for the purpose of the manual fixation of the at least two clamping and gripping elements (5a, 5b), which are designed to jointly receive articles, at the selected fastening positions, and/or whereby
b) the clamping and gripping device (1) is made accessible for the purpose of the removal, preferably without tools, of a clamping and gripping element (5a, 5b) already located at a fastening position or of a plurality of clamping and gripping elements (5a, 5b) already located each at a particular fastening position.

17. The method according to one of the claims 11 to 16, in which a fastening position selected for a first clamping and gripping element (5a) is provided by a first carriage (22), and in which a fastening position selected for a second clamping and gripping element (5b) is provided by a second carriage (24), and the first clamping and gripping element (5a) and the second clamping and gripping element (5b) are fixed in the first and second fastening positions provided by the first carriage and by the second carriage (22, 24), whereupon the first carriage (22) together with the clamping and gripping element (5a) fixed to the first carriage (22) and the second carriage (24) together with the second clamping and gripping element (5b) fixed to the second carriage (24) are moved preferably in a horizontal direction relative to each other, and wherein the first clamping and gripping element (5a) and the second clamping and gripping element (5b) in this context jointly receive one article or a plurality of articles in a clamping manner.

18. The method according to one of the claims 11 to 17, in which it is sensor-verified whether the at least two clamping and gripping elements (5a, 5b) have been properly and removably fixed each at their particular fastening position, and wherein, in the case of an improper fixation of at least one of the at least two clamping and gripping elements (5a, 5b) each at its particular fastening position being determined during the verification, information is output to an operator (9) and/or a manipulation of articles intended for the clamping and gripping device (1) is prevented.

19. The method according to one of the claims 16 to 18, in which the clamping and gripping device (1) is moved or passed on for sensory verification from the service area into a detection range of a sensor system formed by a camera and/or by a line sensor.

## Revendications

1. Système (50) de manipulation d'articles, comprenant
- au moins un dispositif de transport horizontal (15) le long duquel les articles à manipuler peuvent être déplacés,
- au moins un manipulateur (10), ainsi qu'
- au moins un dispositif de serrage et de préhension (1) destiné à recevoir des articles, qui est porté par ledit au moins un manipulateur (10), dans lequel ledit au moins un manipulateur (10) peut être commandé de manière à ce que ledit au moins un manipulateur (10) peut, grâce audit au moins un dispositif de serrage et de préhension (1), amener plusieurs articles déplacés via ledit au moins un dispositif de transport horizontal (15) dans une orientation relative les uns par rapport aux autres, qui, en particulier, est adaptée à une couche palettisable à former à partir de ces plusieurs articles, ou à un groupement déterminé à former par rotation et/ou par déplacement à partir de ces plusieurs articles, et/ou à une répartition déterminée à former par rotation et/ou par déplacement,
et dans lequel système (50)
- le dispositif de serrage et de préhension (1) comprend au moins deux éléments de serrage et de préhension (5a, 5b), chacun disposé de manière suspendue, qui coopèrent pour recevoir temporairement un article ou plusieurs articles, dans lequel le dispositif de serrage et de préhension (1) offre plusieurs positions de fixation différentes pour lesdits au moins deux éléments de serrage et de préhension (5a, 5b), **caractérisé par le fait que**
sur lesdites plusieurs positions de fixation différentes, lesdits au moins deux éléments de serrage et de préhension (5a, 5b) peuvent être fixés de manière sélective et amovible en fonction d'un nombre respectif et/ou de la configuration d'articles à recevoir, dans lequel
lesdits au moins deux éléments de serrage et de préhension (5a, 5b) peuvent être fixés sans outil sur les plusieurs positions de fixation différentes et/ou peuvent être retirés sans outil de leur position de fixation respective.

2. Système (50) selon la revendication 1, comprenant
- une unité de commande couplée audit au moins un manipulateur, et
- au moins un système de capteurs, dans lequel
ledit au moins un système de capteurs est en communication avec l'unité de commande pour vérifier que lesdits au moins deux éléments de serrage et de préhension (5a, 5b) sont correctement fixés sur leur position de fixation respective, et dans lequel, si une fixation incorrecte d'au moins un élément de serrage et de préhension (5a, 5b) est détectée lors du contrôle, l'unité de commande peut empêcher une commande dudit au moins un manipulateur (10) et/ou émettre une indication reconnaissable par un opérateur (9), concernant la fixation incorrecte dudit au moins un élément de serrage et de préhension (5a, 5b).

3. Système (50) selon la revendication 1 ou 2, dans lequel lesdits au moins deux éléments de serrage et de préhension (5a, 5b) sont conçus pour la réception conjointe d'articles, lesquels articles sont formés par des récipients à boisson et en particulier par des bouteilles en PET.

4. Système selon l'une quelconque des revendications 1 à 3, dans lequel lesdits au moins deux éléments de serrage et de préhension (5a, 5b) peuvent être suspendus sans outil sur leur position de fixation respective et/ou dans lequel lesdits au moins deux éléments de serrage et de préhension (5a, 5b) peuvent être détachés sans outil de leur position de fixation respective.

5. Système selon la revendication 4, comprenant respectivement une pièce intermédiaire (23, 25) distincte pour lesdits au moins deux éléments de serrage et de préhension (5a, 5b), qui peut être entièrement séparée mécaniquement de l'élément de serrage et de préhension respectif (5a, 5b), c'est par l'intermédiaire de laquelle pièce intermédiaire (23, 25) que lesdits au moins deux éléments de serrage et de préhension (5a, 5b) peuvent être suspendus sans outil sur leur position de fixation respective et/ou c'est par l'intermédiaire de laquelle pièce intermédiaire (23, 25) que lesdits au moins deux éléments de serrage et de préhension (5a, 5b) peuvent être détachés sans outil de leur position de fixation respective.

6. Système selon l'une quelconque des revendications 1 à 5, dans lequel
- chacune des positions de fixation forme un boulon (30, 32) ou une goupille, et dans lequel
- lesdits au moins deux éléments de serrage et de préhension (5a, 5b) ou lesdites pièces intermédiaires (23, 25) comprennent chacun une rainure (26) correspondant par rapport aux boulons (30, 32) ou bien aux goupilles des positions de fixation, dans laquelle rainure (26) respective peut être reçu(e) le boulon (30, 32) ou la goupille d'une position de fixation respective pour fixer l'élément de serrage et de préhension (5a, 5b) respectif.

7. Système selon la revendication 6, dans lequel lesdits au moins deux éléments de serrage et de préhension (5a, 5b) ou lesdites pièces intermédiaires (23, 25) comprennent chacun un mécanisme de sécurité (40) permettant de maintenir un boulon (30, 32) ou bien une goupille logé(e) dans une rainure (26) respective, à engagement positif dans la rainure (26).

8. Système selon la revendication 7, dans lequel
a) le mécanisme de sécurité (40) respectif comprend un levier de sécurité (42) sollicité par force de ressort qui, grâce à sa force de ressort, maintient le boulon (30, 32) ou bien la goupille logé(e) dans la rainure (26) respective, à engagement positif dans la rainure (26), et/ou dans lequel
b) le mécanisme de sécurité (40) respectif comprend un levier de sécurité (42) sollicité par force de ressort, qui peut pivoter depuis la position de fixation en surmontant la force de ressort et en libérant la rainure (26) pour retirer son élément de serrage et de préhension (5a, 5b) respectif.

9. Système selon l'une quelconque des revendications 1 à 8, dans lequel le dispositif de serrage et de préhension (1) comprend un premier chariot (22) avec plusieurs positions de fixation pour au moins un premier élément de serrage et de préhension (5a) et un deuxième chariot (24) avec plusieurs autres positions de fixation pour au moins un deuxième élément de serrage et de préhension (5b), dans lequel ledit premier chariot (22) et ledit deuxième chariot (24) sont mobiles l'un par rapport à l'autre, de préférence dans la direction horizontale, pour la réception conjointe et temporaire d'un article ou de plusieurs articles via ledit au moins un premier élément de serrage et de préhension (5a) et ledit au moins un deuxième élément de serrage et de préhension (5b fixés dans une position de fixation respective sur le premier chariot (22) et le deuxième chariot (24).

10. Système selon l'une quelconque des revendications 1 à 9, dans lequel ledit au moins un manipulateur (10) est formé par au moins un robot à cinématique delta (12).

11. Procédé d'équipement d'un dispositif de serrage et de préhension (1) prévu pour un manipulateur (10), comprenant au moins deux éléments de serrage et de préhension (5a, 5b) destinés à la réception conjointe d'articles, dans un système (50) selon l'une quelconque des revendications 1 à 9, comprenant les étapes suivantes consistant à:
- choisir au moins deux positions de fixation fournies par le dispositif de serrage et de préhension (1), pour lesdits au moins deux éléments de serrage et de préhension (5a, 5b) conçus pour la réception conjointe d'articles; et
- fixer lesdits au moins deux éléments de serrage et de préhension (5a, 5b) conçus pour la réception conjointe d'articles, sur lesdites au moins deux positions de fixation choisies, **caractérisé par le fait que**
- lesdites au moins deux positions de fixation sont choisies chacune parmi une pluralité de positions de fixation possibles et en tenant compte d'un nombre et/ou d'une configuration d'articles à recevoir conjointement par lesdits au moins deux éléments de serrage et de préhension (5a, 5b), et que, ensuite, lesdits au moins deux éléments de serrage et de préhension (5a, 5b) sont fixés de manière amovible sur lesdits au moins deux positions de fixation choisies, et dans lequel
- lesdits au moins deux éléments de serrage et de préhension (5a, 5b) conçus pour recevoir des articles sont fixés sans outil sur lesdites au moins deux positions de fixation choisies, et/ou dans lequel
- avant de fixer lesdits au moins deux éléments de serrage et de préhension (5a, 5b) conçus pour recevoir conjointement des articles, un élément de serrage et de préhension (5a, 5b) déjà situé à une position de fixation ou plusieurs éléments de serrage et de préhension (5a, 5b) déjà situés à une position de fixation respective sont détachés sans outil de leur position de fixation respective.

12. Procédé selon la revendication 11, dans lequel
a) lesdits au moins deux éléments de serrage et de préhension (5a, 5b) conçus pour recevoir des articles sont suspendus sur lesdites au moins deux positions de fixation choisies et sont ainsi fixés sans outils sur lesdites au moins deux positions de fixation; et/ou dans lequel
b) avant de fixer lesdits au moins deux éléments de serrage et de préhension (5a, 5b) conçus pour recevoir conjointement des articles, un élément de serrage et de préhension (5a, 5b) déjà situé à une position de fixation ou plusieurs éléments de serrage et de préhension (5a, 5b) déjà situés à une position de fixation respective sont détachés et ainsi retirés sans outil de leur position de fixation respective.

13. Procédé selon la revendication 12, dans lequel
a) lesdits au moins deux éléments de serrage et de préhension (5a, 5b) conçus pour recevoir des articles sont suspendus sur lesdites au moins deux positions de fixation choisies par l'intermédiaire d'une pièce intermédiaire (23, 25) respective distincte qui peut être complètement séparée de manière mécanique de l'élément de serrage et de préhension (5a, 5b) respectif et sont ainsi fixés sans outil sur lesdites au moins deux positions de fixation; et/ou dans lequel
b) avant de fixer lesdits au moins deux éléments de serrage et de préhension (5a, 5b) conçus pour recevoir conjointement des articles, un élément de serrage et de préhension (5a, 5b) déjà situé à une position de fixation ou plusieurs éléments de serrage et de préhension (5a, 5b) déjà situés à une position de fixation respective et une pièce intermédiaire (23, 25) respective distincte qui peut être complètement séparée de l'élément de serrage et de préhension (5a, 5b) respectif et porte l'élément de serrage et de préhension (5a, 5b) respectif sont détachés, dans lequel l'élément de serrage et de préhension (5a, 5b) respectif ainsi que la pièce intermédiaire (23, 25) respective sont retirés sans outil de leur position de fixation respective.

14. Procédé selon la revendication 13, dans lequel lesdits au moins deux éléments de serrage et de préhension (5a, 5b) conçus pour recevoir des articles et/ou la pièce intermédiaire (23, 25) respective distincte qui peut être complètement séparée de l'élément de serrage et de préhension (5a, 5b) respectif sont chacun dotés d'un mécanisme de sécurité (40) apte à être libéré manuellement, et dans lequel
a) au niveau d'une position de fixation choisie, un boulon (30, 32) ou une goupille est disposé(e), dans lequel/laquelle l'élément de serrage et de préhension (5a, 5b) respectif lui-même ou par l'intermédiaire de la pièce intermédiaire (23, 25) respective est suspendu(e) via une rainure (26) faisant partie intégrante de l'élément de serrage et de préhension (5a, 5b) respectif ou de la pièce intermédiaire (23, 25), ce après quoi le mécanisme de sécurité (40) apte à être libéré manuellement maintient le boulon (30, 32) respectif ou la goupille respective à engagement positif dans la rainure (26) et fixe ainsi l'élément de serrage et de préhension (5a, 5b) respectif à engagement positif sur la position de fixation choisie respective, et/ou dans lequel
b) avant de fixer lesdits au moins deux éléments de serrage et de préhension (5a, 5b) conçus pour recevoir conjointement des articles, un élément de serrage et de préhension (5a, 5b) déjà situé à une position de fixation ou plusieurs éléments de serrage et de préhension (5a, 5b) déjà situés à une position de fixation respective sont détachés d'eux-mêmes ou via une pièce intermédiaire (23, 25) respective, ce pour quoi le mécanisme de sécurité (40) maintenant l'élément de serrage et de préhension (5a, 5b) respectif à engagement positif dans la position de fixation respective est libéré, et ensuite un boulon (30, 32) ou une goupille se trouvant dans la position de fixation respective est déplacé(e) hors d'une rainure (26) réalisée en tant partie intégrante de l'élément de serrage et de préhension (5a, 5b) respective ou de la pièce intermédiaire (23, 25) respective.

15. Procédé selon la revendication 14, dans lequel les mécanismes de sécurité (40) comprennent chacun au moins un levier de sécurité (42) sollicité par force de ressort, dans lequel
a) ledit au moins un levier de sécurité (42) sollicité par force de ressort maintient le boulon (30, 32) ou la goupille à engagement positif dans la rainure (26) et fixe ainsi l'élément de serrage et de préhension (5a, 5b) respectif à engagement positif dans la position de fixation choisie respective, et/ou dans lequel
b) avant de fixer lesdits au moins deux éléments de serrage et de préhension (5a, 5b) conçus pour recevoir conjointement des articles, un élément de serrage et de préhension (5a, 5b) déjà situé à une position de fixation ou plusieurs éléments de serrage et de préhension (5a, 5b) déjà situés à une position de fixation respective sont détachés, ce pour quoi, avant, ledit au moins un levier de sécurité (42) sollicité par force de ressort des plusieurs éléments de serrage et de préhension (5a, 5b) se trouvant déjà sur une position de fixation respective ou de la pièce intermédiaire (23, 25) respective est pivoté en surmontant une force de ressort respective et, en conséquence, la rainure (26) de l'élément de serrage et de préhension (5a, 5b) respectif ou de la pièce intermédiaire (23, 25) respective est libérée pour déplacer le boulon respectif (30, 32) ou la goupille respective hors de la rainure (26) respective.

16. Procédé selon l'une quelconque des revendications 11 à 15, dans lequel le dispositif de serrage et de préhension (1) est déplacé dans une zone de service pour fixer lesdits au moins deux éléments de serrage et de préhension (5a, 5b) conçus pour recevoir conjointement des articles, sur lesdites au moins deux positions de fixation choisies, c'est dans laquelle zone de service que le dispositif de serrage et de préhension (1) est situé dans la zone d'accès d'une personne ou d'un opérateur, ce par quoi
a) le dispositif de serrage et de préhension (1) est rendu accessible à un utilisateur (9) pour fixer manuellement lesdits au moins deux éléments de serrage et de préhension (5a, 5b) conçus pour recevoir conjointement des articles, dans les positions de fixation choisies, et/ou ce par quoi
b) le dispositif de serrage et de préhension (1) est rendu accessible pour le retrait, de préférence sans outil, d'un élément de serrage et de préhension (5a, 5b) déjà situé à une position de fixation ou de plusieurs éléments de serrage et de préhension (5a, 5b) déjà situés à une position de fixation respective.

17. Procédé selon l'une quelconque des revendications 11 à 16, dans lequel une position de fixation choisie pour un premier élément de serrage et de préhension (5a) est fournie par un premier chariot (22), et dans lequel une position de fixation choisie pour un deuxième élément de serrage et de préhension (5b) est fournie par un deuxième chariot (24), et le premier élément de serrage et de préhension (5a) et le deuxième élément de serrage et de préhension (5b) sont fixés sur les première et deuxième positions de fixation fournies par les premier et deuxième chariots (22, 24), ce après quoi le premier chariot (22) conjointement avec l'élément de serrage et de préhension (5a) fixé sur le premier chariot (22) et le deuxième chariot (24) conjointement avec le deuxième élément de serrage et de préhension (5b) fixé sur le deuxième chariot (24) sont déplacés les uns par rapport aux autres, de préférence dans la direction horizontale, et dans lequel, lors de cela, le premier élément de serrage et de préhension (5a) et le deuxième élément de serrage et de préhension (5b) reçoivent par serrage conjointement un article ou plusieurs articles.

18. Procédé selon l'une quelconque des revendications 11 à 17, dans lequel il est contrôlé par capteur si lesdits au moins deux éléments de serrage et de préhension (5a, 5b) ont été correctement fixés de manière amovible sur leur position de fixation respective, et dans lequel, si une fixation incorrecte d'au moins un desdits au moins deux éléments de serrage et de préhension (5a, 5b) sur sa position de fixation respective est détectée lors du contrôle, une notification est envoyée à un opérateur (9) et/ou une manipulation d'articles prévue pour le dispositif de serrage et de préhension (1) est empêchée.

19. Procédé selon les revendications 16 et 18, dans lequel, pour le contrôle par capteur, le dispositif de serrage et de préhension (1) est déplacé de la zone de service vers une zone de détection d'un système de capteurs formé par une caméra et/ou un capteur linéaire.
